(19) Europäisches Patentamt
European Patent Office
Office européen des brevets

(11) **EP 3 954 658 A1**

(12) **EUROPEAN PATENT APPLICATION**
published in accordance with Art. 153(4) EPC

(43) Date of publication:
**16.02.2022 Bulletin 2022/07**

(21) Application number: **19924475.7**

(22) Date of filing: **20.12.2019**

(51) International Patent Classification (IPC):
*C01G 53/00* (2006.01)   *H01M 4/36* (2006.01)
*H01M 4/505* (2010.01)   *H01M 4/525* (2010.01)

(52) Cooperative Patent Classification (CPC):
**C01G 53/00; H01M 4/36; H01M 4/505;
H01M 4/525;** Y02E 60/10

(86) International application number:
**PCT/JP2019/049989**

(87) International publication number:
**WO 2020/208872 (15.10.2020 Gazette 2020/42)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **12.04.2019   JP 2019076522**

(71) Applicant: **SUMITOMO CHEMICAL COMPANY,
LIMITED
Chuo-ku
Tokyo 104-8260 (JP)**

(72) Inventors:
• **TAKAMORI Kenji
  Niihama-shi, Ehime 792-8521 (JP)**
• **KURODA Tomoya
  Fukui-shi, Fukui 910-3131 (JP)**

(74) Representative: **Vossius & Partner
Patentanwälte Rechtsanwälte mbB
Siebertstraße 3
81675 München (DE)**

(54) **LITHIUM METAL COMPLEX OXIDE POWDER AND LITHIUM SECONDARY BATTERY POSITIVE ELECTRODE ACTIVE MATERIAL**

(57)   This lithium metal composite oxide powder has a layered crystal structure and includes at least Li, Ni, an element X, and an element M, in which the element X is one or more elements selected from the group consisting of Co, Mn, Fe, Cu, Ti, Mg, Al, W, Mo, Nb, Zn, Sn, Zr, Ga, and V, the element M is one or more elements selected from the group consisting of B, Si, S, and P, a content of the element M to a total amount of Ni and the element X in the lithium metal composite oxide powder is 0.01 mol% or more and 5 mol% or less, a content (Ni/(Ni + X)) of Ni to the total amount of Ni and the element X in the lithium metal composite oxide powder is 0.4 or more in terms of a mole ratio, and (1), (2), and (3) are satisfied.

**Description**

[Technical Field]

The present invention relates to a lithium metal composite oxide powder and a positive electrode active material for a lithium secondary battery.

Priority is claimed on Japanese Patent Application No. 2019-076522, filed in Japan on April 12, 2019, the content of which is incorporated herein by reference.

[Background Art]

Attempts of putting lithium secondary batteries into practical use not only for small-sized power sources in mobile phone applications, notebook personal computer applications, and the like but also for medium-sized or large-sized power sources in automotive applications, power storage applications, and the like have already been underway. In lithium secondary batteries, a positive electrode active material is used. As the positive electrode active material, a lithium metal composite oxide is used.

When a lithium metal composite oxide powder is used as a positive electrode active material for a lithium secondary battery, the lithium metal composite oxide powder comes into contact with an electrolytic solution on the surfaces of primary particles, on the surfaces of secondary particles, and inside the secondary particles, lithium ions are inserted into the particles, and lithium ions are desorbed from the insides of the particles. Therefore, it is important to control the surface state of the primary particles or secondary particles of the lithium metal composite oxide powder in order to improve battery characteristics.

For example, Patent Document 1 describes a positive electrode active material for a lithium secondary battery in which an adjustment is made so as to obtain a specific atomic concentration ratio in each of the surface portions of the particles of the positive electrode active material and the inside portions of the particles.

[Citation List]

[Patent Document]

[Patent Document 1] Japanese Unexamined Patent Application, First Publication No. 2014-38828

[Summary of Invention]

[Technical Problem]

While the application of lithium secondary batteries to a variety of fields is underway, for positive electrode active materials for lithium secondary batteries, there is a demand for additional improvement in battery characteristics such as discharge capacity retention rates at high current rates and the like.

The present invention has been made in view of the above-described circumstances, and an object of the present invention is to provide a lithium metal composite oxide powder capable of improving the discharge capacity retention rate at a high current rate of a lithium secondary battery in the case of being used as a positive electrode active material for the lithium secondary battery and a positive electrode active material for a lithium secondary battery in which the same is used.

[Solution to Problem]

That is, the present invention includes the following inventions [1] to [8].

[1] A lithium metal composite oxide powder having a layered crystal structure, including at least Li, Ni, an element X, and an element M, in which the element X is one or more elements selected from the group consisting of Co, Mn, Fe, Cu, Ti, Mg, Al, W, Mo, Nb, Zn, Sn, Zr, Ga, and V, the element M is one or more elements selected from the group consisting of B, Si, S, and P, a ratio of a content of the element M to a total amount of Ni and the element X in the lithium metal composite oxide powder is 0.01 mol% or more and 5 mol% or less, a ratio of a content of Ni to the total amount of Ni and the element X, which is indicated by Ni/(Ni + X), in the lithium metal composite oxide powder is 0.4 or more in terms of a mole ratio, and the following (1), (2), and (3) are satisfied.

(1) A mole ratio between element concentrations of Li and the element M that is indicated by Li/element M continuously increases from a particle surface to a particle center of the lithium metal composite oxide powder.
(2) A mole ratio between element concentrations of O and the element M that is indicated by O/element M continuously increases from the particle surface to the particle center of the lithium metal composite oxide powder.
(3) A mole ratio between the element concentrations of the element M and O that is indicated by element M/O inside the particle of the lithium metal composite oxide powder is 0.05 or less.

[2] The lithium metal composite oxide powder according to [1] that is represented by the following composition formula (A).

$$Li[Li_{n1}(Ni_{(1-z-w)}X_zM_w)_{1-n1}]O_2 \ (A)$$

(Here, X is one or more elements selected from the group consisting of Co, Mn, Fe, Cu, Ti, Mg, Al, W, Mo, Nb, Zn, Sn, Zr, Ga, and V, M is one or more elements selected from the group consisting of B, Si, S, and P, and $0 \leq n1 \leq 0.2$, $0 < z \leq 0.6$, and $0 < w \leq 0.1$ are satisfied.)

[3] The lithium metal composite oxide powder according to [1] or [2], in which a BET specific surface area is 2 $m^2/g$ or less.

[4] The lithium metal composite oxide powder according to any one of [1] to [3], in which an average primary particle diameter is 0.3 $\mu$m or more and 8 $\mu$m or less.

[5] The lithium metal composite oxide powder according to any one of [1] to [4], in which, in a 10% cumulative diameter ($D_{10}$), a 50% cumulative diameter ($D_{50}$), and a 90% cumulative diameter ($D_{90}$), all of which are obtained from particle size distribution measurement values, the 50% cumulative diameter ($D_{50}$) is 2 $\mu$m or more and 10 $\mu$m or less, and furthermore, a relationship of the following formula (B) is satisfied.

$$0.3 \leq (D_{90} - D_{10}) / D_{50} \leq 3 \ ... \ (B)$$

[6] The lithium metal composite oxide powder according to any one of [1] to [5], in which a value obtained by dividing a moisture content (mass%) by a BET specific surface area ($m^2/g$) that is indicated by moisture content (mass%)/BET specific surface area ($m^2/g$) is 0.005 or more and 0.7 or less.

[7] The lithium metal composite oxide powder according to any one of [1] to [6], in which a maximum concentration gradient $R_{Li/M}$ in a range where the mole ratio between the element concentrations of Li and the element M that is indicated by Li/element M continuously increases from the particle surface to the particle center of the lithium metal composite oxide powder is small compared with a maximum concentration gradient $R_{O/M}$ in a range where the mole ratio between the element concentrations of O and the element M that is indicated by O/element M continuously increases from the particle surface to the particle center of the lithium metal composite oxide powder ($R_{O/M} > R_{Li/M}$).

[8] A positive electrode active material for a lithium secondary battery, containing the lithium metal composite oxide powder according to any one of [1] to [7].

Furthermore, as the aspect of the present invention, the following aspects are exemplary examples.

[9] A positive electrode for a lithium secondary battery, containing the positive electrode active material for a lithium secondary battery according to [8]

[10] A lithium secondary battery having the positive electrode for a lithium secondary battery according to [9].

[Advantageous Effects of Invention]

According to the present invention, it is possible to provide a lithium metal composite oxide powder capable of improving the discharge capacity retention rate at a high current rate of a lithium secondary battery in the case of being used as a positive electrode active material for the lithium secondary battery and a positive electrode active material for a lithium secondary battery in which the same is used.

[Brief Description of Drawings]

Fig. 1A is a schematic configuration view showing an example of a lithium-ion secondary battery.
Fig. 1B is a schematic configuration view showing the example of the lithium-ion secondary battery.
Fig. 2 is graphs showing concentration gradients of elements in Example 1 and Comparative Example 2.
Fig. 3 is a schematic view showing a laminate that an all-solid-state lithium-ion battery of the present embodiment includes.

Fig. 4 is a schematic view showing an entire configuration of the all-solid-state lithium-ion battery of the present embodiment.

[Description of Embodiments]

<Lithium metal composite oxide powder>

The present embodiment is a lithium metal composite oxide powder having a layered crystal structure.

The lithium metal composite oxide powder of the present embodiment contains at least Li, Ni, an element X, and an element M.

The element X is one or more elements selected from the group consisting of Co, Mn, Fe, Cu, Ti, Mg, Al, W, Mo, Nb, Zn, Sn, Zr, Ga, and V.

The element M is one or more elements selected from the group consisting of B, Si, S, and P.

The ratio of the content of the element M to the total amount of Ni and the element X in the lithium metal composite oxide powder is 0.01 mol% or more and 5 mol% or less.

The ratio (Ni/(Ni + X)) of the content of Ni to the total amount of Ni and the element X in the lithium metal composite oxide powder is 0.4 or more in terms of the mole ratio.

In the present embodiment, the element X is preferably at least one of Ti, Mg, Al, W, and Zr from the viewpoint of obtaining a lithium secondary battery having a high discharge capacity retention rate at a high current rate and is preferably at least one of Al, W, and Zr in a sense of obtaining a lithium secondary battery having high thermal stability.

In the present embodiment, a compound containing the element M has lithium ion conductivity. In the present embodiment, the element M is preferably at least one of B, S, and P and more preferably B from the viewpoint of obtaining a lithium secondary battery having a high discharge capacity retention rate at a high current rate.

In the present embodiment, the content of the element M to the total amount of Ni and the element X (that is, the ratio of the content of the element M to the total amount of Ni and the element X) in the lithium metal composite oxide powder is 0.01 mol% or more and 5 mol% or less. As the lower limit value of the content of the element M, 0.02 mol%, 0.03 mol%, or 0.04 mol% is an exemplary example. As the upper limit value of the content of the element M, 4.9 mol%, 4.8 mol%, or 4.7 mol% is an exemplary example.

The upper limit value and the lower limit value thereof can be randomly combined. As examples of the combination, the content of the element M to the total amount of Ni and the element X of 0.02 mol% or more and 4.9 mol% or less, 0.03 mol% or more and 4.8 mol% or less, or 0.04 mol% or more and 4.7 mol or less is an exemplary example.

When the content of the element M is the above-described lower limit value or more, that is, when the content of the element M to the total amount of Ni and the element X is 0.01 mol% or more, it is possible to prevent the metal components in the lithium metal composite oxide powder from being eluted into electrolytic solutions. In addition, when the content of the element M is the above-described lower limit value or less, that is, when the content of the element M to the total amount of Ni and the element X is 5 mol% or less, it is possible to decrease resistance in a case where the lithium metal composite oxide powder is used as a positive electrode active material.

The content of the element M to the total amount of Ni and the element X in the lithium metal composite oxide powder can be determined by, for example, the following method. After the lithium metal composite oxide powder is dissolved in hydrochloric acid, the composition analysis of the lithium metal composite oxide powder is carried out using an inductively coupled plasma emission spectrometer (for example, SPS3000 manufactured by Seiko Instruments Inc.). From the analysis result, the content of the element M to the total amount of Ni and the element X is calculated.

In the present embodiment, the content of Ni to the total amount of Ni and the element X (that is, the ratio of the content of Ni to the total amount of Ni and the element X and indicated by Ni/(Ni + X)) in the lithium metal composite oxide powder is 0.4 or more, preferably 0.45 or more, more preferably 0.50 or more, and particularly preferably 0.55 or more in terms of the mole ratio. The upper limit value of (Ni/(Ni + X)) is not particularly limited, and, as an example, 0.95, 0.92, or 0.90 is an exemplary example.

The upper limit value and the lower limit value thereof can be randomly combined. As examples of the combination, (Ni/(Ni + X)) of 0.4 or more and 0.95 or less, 0.45 or more and 0.95 or less, 0.50 or more and 0.92 or less, or 0.55 or more and 0.90 or less is an exemplary example.

When the content of Ni is within the above-described range, that is, 0.4 or more, it is possible to improve the charge and discharge capacity.

The content of Ni to the total amount of Ni and the element X in the lithium metal composite oxide powder can be determined by, for example, the following method. After the lithium metal composite oxide powder is dissolved in hydrochloric acid, the composition analysis of the lithium metal composite oxide powder is carried out using an inductively coupled plasma emission spectrometer (for example, SPS3000 manufactured by Seiko Instruments Inc.). From the analysis result, the mole ratio of the content of Ni to the total amount of Ni and the element X is calculated.

The lithium metal composite oxide powder of the present embodiment further satisfies the following (1), (2), and (3).

(1) The mole ratio (Li/element M) between the element concentrations of Li and the element M continuously increases from the particle surface to the particle center of the lithium metal composite oxide powder.
(2) The mole ratio (O/element M) between the element concentrations of O and the element M continuously increases from the particle surface to the particle center of the lithium metal composite oxide powder.
(3) The mole ratio (element M/O) between the element M and O inside the particle of the lithium metal composite oxide powder is 0.05 or less.

It should be noted that, in the present specification, "O" indicates an oxygen element.

In the following description, "particle" includes both a secondary particle that is an aggregate of primary particles and a primary particle that is present independently of the secondary particle. It should be noted that "primary particle" means a particle in which no clear grain boundary is visible from the particle surface in the case of being observed in a visual field magnified 5000 times or more and 20000 times or less with a scanning electron microscope or the like. In addition, "secondary particle" is a particle that is aggregation of the primary particles and means a particle having a spherical or substantially spherical shape.

"Particle surface" refers to the outermost surface of a particle.

"Particle center" means the geometric center of a particle.

"Inside the particle" means a region of D/2 or more and 3D/2 or less from the particle surface to the particle center where D indicates the radius of the particle.

"Particle radius" means the length of half the longest diameter in an observation image of a particle.

"Continuously increasing" means having a concentration gradient that gradually increases at least 5 nm from the particle surface to the particle center.

"Increasing" means that the element concentration on the particle surface is regarded as the minimum value and the element concentration increases from this minimum value toward the particle center. In the present embodiment, as long as the element concentration increases from this minimum value, the element concentration may be maintained or slightly decreases from the particle surface to the particle center. Here, "slightly decreasing" means that, when the element concentrations are measured from the particle surface to the particle center, the measurement value on the particle center side decreases from the measurement value on the particle surface side by 10% or less.

In addition, (Li/element M) and (O/element M) at the particle center and on the particle surface can be confirmed by a method of, for example, ordinary transmission electron microscope (TEM)-energy-dispersive X-ray spectroscopy (EDX) or transmission electron microscope (TEM)-electron energy-loss spectroscopy (EELS).

Specifically, first, ion milling or processing with focused ion beams or the like is carried out on a random lithium metal composite oxide powder as a measurement target, thereby producing an observation sample of the particle.

Next, the obtained observation sample is observed with a TEM at an appropriate magnification. In the obtained TEM observation image, the particle center and the particle surface are analyzed by electron energy-loss spectroscopy (EELS) to obtain the element concentrations (at%) at the particle center and on the particle surface.

It is possible to grasp the mole ratio between the element concentrations at the particle center and on the particle surface by comparing the obtained element concentrations.

In the present embodiment, line analysis is preferably carried out by EELS on a straight line from a random point that is positioned on the outermost surface of a particle toward the center. According to the line analysis, it is possible to accurately grasp the transition of the concentration ratio of the element concentration from the surface to the center of the particle. In addition, the line analysis by EELS is preferably analyzed every range of 0.3 nm or less in the depth direction.

The measurement of the mole ratio between the element concentrations of the element M and O inside the particle can be measured by the following method. The lithium metal composite oxide powder is sliced using a focused ion beam device (FIB, for example, JIB-4501 manufactured by JEOL Ltd.), a particle cross section is observed with an analysis electron microscope (for example, ARM200F manufactured by JEOL Ltd.), and point analysis is carried out using an EDX detector (for example, JED-2300T manufactured by JEOL Ltd.) in a region of D/2 or more and 3D/2 or less from the particle surface to the particle center where D indicates the particle radius. Thereby, the mole ratio (element M/O) between the element concentrations of the element M and O is measured.

Requirement (1)

In the lithium metal composite oxide powder of the present embodiment, the concentrations of the element M differ at the particle centers and on the particle surfaces of the lithium metal composite oxide powder.

In the lithium metal composite oxide powder of the present embodiment, the mole ratio (Li/element M) between the element concentrations of Li and the element M continuously increases from the particle surface to the particle center. That is, in the lithium metal composite oxide powder of the present embodiment, the lithium element concentration gradually increases from the particle surface to the particle center. In other words, the concentration of the element M on the particle surface is relatively higher than the concentration inside the particle. In addition, more specifically, it is preferable that the concentration of the element M continuously increases in a region of 20 nm or less from the surface to the center of a particle.

Requirement (2)

In the lithium metal composite oxide powder of the present embodiment, the mole ratio (O/element M) between the element concentrations of O and the element M continuously increases from the particle surface to the particle center. That is, in the lithium metal composite oxide powder of the present embodiment, the oxygen element concentration gradually increases from the particle surface to the particle center. In other words, the concentration of the element M on the particle surface is relatively higher than the concentration inside the particle.

Due to the requirement (1) and the requirement (2), in the lithium metal composite oxide powder of the present embodiment, the concentration of the element M on the particle surface in contact with the electrolytic solution is relatively higher than the concentration of the element M inside the particles. In other words, it is possible to increase the presence proportions of a compound containing the element M on the particle surfaces. It is considered that the compound containing the element M has a high affinity to the electrolytic solution, it is easy to trade lithium ions between the lithium metal composite oxide powder and the electrolytic solution, and the discharge capacity retention rate at a high current rate becomes high.

Requirement (3)

In the lithium metal composite oxide powder of the present embodiment, the mole ratio (element M/O) between the element M and O inside a particle is 0.05 or less, preferably 0.02 or less, more preferably 0.01 or less, and particularly preferably 0.009 or less. This means that the element M concentrations at the particle centers are relatively low. That is, at the particle centers, the concentrations of elements other than the element M are high. Therefore, the interaction between the element M and lithium ions is unlikely to occur at the particle centers, and a crystal structure having a high charge and discharge capacity can be held. Therefore, it is possible to increase the charge and discharge capacity. The lower limit value of the mole ratio (element M/O) between the element M and O inside a particle is not particularly limited and is, for example, 0.0001.

The upper limit value and the lower limit value of the mole ratio (element M/O) between the element M and O inside a particle can be randomly combined. For example, the mole ratio (element M/O) between the element M and O inside a particle is 0.0001 or more and 0.05 or less, preferably 0.0005 or more and 0.02 or less, more preferably 0.0008 or more and 0.01 or less, and particularly preferably 0.0012 or more and 0.009 or less.

The lithium metal composite oxide powder of the present embodiment is preferably represented by the following composition formula (A).

$$Li[Li_{n1}(Ni_{(1-z-w)}X_zM_w)_{1-n1}]O_2 \ (A)$$

(Here, X is one or more elements selected from the group consisting of Co, Mn, Fe, Cu, Ti, Mg, Al, W, Mo, Nb, Zn, Sn, Zr, Ga, and V, M is one or more elements selected from the group consisting of B, Si, S, and P, and $0 \le n1 \le 0.2$, $0 < z \le 0.6$, and $0 < w \le 0.1$ are satisfied.)

• n1

In the composition formula (A), n1 is more than 0, preferably 0.001 or more, more preferably 0.002 or more, and still more preferably 0.003 or more from the viewpoint of improving cycle characteristics. In addition, n1 is preferably 0.19 or less, more preferably 0.18 or less, and particularly preferably 0.17 or less.

The upper limit value and the lower limit value thereof can be randomly combined. For example, n1 is preferably more than 0 and 0.19 or less, more preferably 0.001 or more and 0.18 or less, still more preferably 0.002 or more and 0.17 or less, and particularly preferably 0.003 or more and 0.17 or less.

• z

In the composition formula (A), z is more than 0, preferably 0.001 or more, and more preferably 0.02 or more from the viewpoint of improving cycle characteristics. In addition, z is preferably 0.50 or less, more preferably 0.48 or less, and particularly preferably 0.46 or less.

The upper limit value and the lower limit value thereof can be randomly combined. For example, z is preferably more than 0 and 0.50 or less, more preferably 0.001 or more and 0.48 or less, and particularly preferably 0.02 or more and 0.46 or less.

• w

In the composition formula (A), w is preferably more than 0, more preferably 0.001 or more, and particularly preferably 0.002 or more from the viewpoint of improving the cycle characteristics. In addition, w is preferably 0.09 or less, more preferably 0.08 or less, and particularly preferably 0.07 or less.

The upper limit value and the lower limit value thereof can be randomly combined. For example, w is preferably more than 0 and 0.09 or less, more preferably 0.001 or more and 0.08 or less, and particularly preferably 0.002 or more and 0.07 or less.

In the lithium metal composite oxide powder of the present embodiment, the BET specific surface area is preferably 2 $m^2/g$ or less.

In the lithium metal composite oxide powder of the present embodiment, the BET specific surface area is more preferably 1.8 $m^2/g$ or less, still more preferably 1.5 $m^2/g$ or less, and particularly preferably 1.2 $m^2/g$ or less.

The lower limit value of the BET specific surface area of the lithium metal composite oxide powder is not particularly limited, and, for example, 0.1 $m^2/g$ is an exemplary example.

The upper limit value and the lower limit value can be randomly combined, and, for example, the BET specific surface area of the lithium metal composite oxide powder is preferably 0.1 $m^2/g$ or more and 2 $m^2/g$ or less, more preferably 0.12 $m^2/g$ or more and 1.8 $m^2/g$ or less, still more preferably 0.15 $m^2/g$ or more and 1.5 $m^2/g$ or less, and particularly preferably 0.18 $m^2/g$ or more and 1.2 $m^2/g$ or less.

The BET specific surface area of the lithium metal composite oxide powder can be obtained by, for example, drying 1 g of the lithium metal composite oxide powder in a nitrogen atmosphere at 105°C for 30 minutes and then measuring the BET specific surface area using a BET specific surface area meter (for example, Macsorb (registered trademark) manufactured by Mountech Co., Ltd.) (unit: $m^2/g$).

In the lithium metal composite oxide powder of the present embodiment, the average primary particle diameter is preferably 0.3 $\mu$m or more and 8 $\mu$m or less.

The average primary particle diameter of the lithium metal composite oxide powder of the present embodiment is more preferably 0.5 $\mu$m or more, still more preferably 0.8 $\mu$m or more, and particularly preferably 1 $\mu$m or more.

In addition, the average primary particle diameter of the lithium metal composite oxide powder of the present embodiment is more preferably 8 $\mu$m or less, still more preferably 7 $\mu$m or less, and particularly preferably 6 $\mu$m or less.

The upper limit value and the lower limit value thereof can be randomly combined. For example, the average primary particle diameter of the lithium metal composite oxide powder of the present embodiment is more preferably 0.5 $\mu$m or more and 8 $\mu$m or less, still more preferably 0.8 $\mu$m or more and 7 $\mu$m or less, and particularly preferably 1 $\mu$m or more and 6 $\mu$m or less.

•• Average primary particle diameter

The average primary particle diameter of the lithium metal composite oxide powder can be measured by the following method.

First, the lithium metal composite oxide powder is placed on a conductive sheet attached onto a sample stage and SEM-observed with a scanning electron microscope (SEM, for example, JSM-5510 manufactured by JEOL Ltd.) while being irradiated with an electron beam at an accelerating voltage of 20 kV. 50 primary particles are randomly extracted from an image (SEM photograph) obtained by the SEM observation, and, for each of the primary particles, the distance (unidirectional diameter) between parallel lines sandwiched between the parallel lines drawn on a projected image of the primary particle in a certain direction is measured as the particle diameter of the primary particle. The arithmetic average value of the obtained particle diameters of the primary particles is taken as the average primary particle diameter of the lithium metal composite oxide powder.

In the lithium metal composite oxide powder of the present embodiment, it is preferable that, in a 10% cumulative diameter ($D_{10}$), a 50% cumulative diameter ($D_{50}$), and a 90% cumulative diameter ($D_{90}$), all of which are obtained from the particle size distribution measurement values of all particles that are included in the lithium metal composite oxide powder, that is, secondary particles that are each aggregation of the primary particles and the primary particles present independently of the secondary particles, the 50% cumulative diameter ($D_{50}$) is 2 $\mu$m or more and 10 $\mu$m or less, and furthermore, a relationship of the following formula (B) is satisfied.

$$0.3 \leq (D_{90} - D_{10}) / D_{50} \leq 3 \ ... \ (B)$$

The lower limit value of the 50% cumulative diameter ($D_{50}$) is preferably 2.5 $\mu$m or more, more preferably 3 $\mu$m or more, and still more preferably 3.5 $\mu$m or more.

The upper limit value of the 50% cumulative diameter ($D_{50}$) is preferably 9 $\mu$m or less, more preferably 8 $\mu$m or less, and still more preferably 7 $\mu$m or less.

The upper limit value and the lower limit value of the 50% cumulative diameter ($D_{50}$) can be randomly combined. In the present embodiment, the combination is preferably 2.5 $\mu$m or more and 9 $\mu$m or less, more preferably 3 $\mu$m or more and 8 $\mu$m or less, and still more preferably 3.5 $\mu$m or more and 7 $\mu$m or less.

The lower limit value of the relationship represented by the formula (B) is preferably 0.4 or more, more preferably 0.5 or more, and particularly preferably 0.55 or more.

The upper limit value of the relationship represented by the formula (B) is preferably 2.5 or less, more preferably 2 or less, and particularly preferably 1.5 or less.

The upper limit value and the lower limit value of the relationship represented by the formula (B) can be randomly combined. In the present embodiment, the combination is preferably 0.4 or more and 2.5 or less, more preferably 0.5 or more and 2 or less, and particularly preferably 0.55 or more and 1.5 or less.

The 10% cumulative diameter ($D_{10}$), the 50% cumulative diameter ($D_{50}$), and the 90% cumulative diameter ($D_{90}$) can be obtained by the following method.

0.1 g of the lithium metal composite oxide powder is put into 50 ml of 0.2 mass% sodium hexametaphosphate aqueous solution to obtain a dispersion liquid in which the powder is dispersed. The particle size distribution of the obtained dispersion liquid is measured using a laser diffraction scattering particle size distribution measuring device (for example, MASTERSIZER 2000 manufactured by Malvern Panalytical Ltd.) to obtain a volume-based cumulative particle size distribution curve. In the obtained cumulative particle size distribution curve, the volume particle size at the time of 50% accumulation is defined as $D_{50}$, which is the 50% cumulative volume particle size of the lithium metal composite oxide powder. Furthermore, in the obtained cumulative particle size distribution curve, the volume particle size at the time of 10% accumulation is defined as $D_{10}$, which is the 10% cumulative volume particle size of the lithium metal composite oxide powder. Furthermore, in the obtained cumulative particle size distribution curve, the volume particle size at the time of 90% accumulation is defined as $D_{90}$, which is the 90% cumulative volume particle size of the lithium metal composite oxide powder.

In the lithium metal composite oxide powder of the present embodiment, from the viewpoint of forming an appropriate electrode structure, that is, the lithium metal composite oxide powder, a conductive material, and a binder are appropriately mixed and disposed and both the electrode strength and the electron conductivity can be satisfied, a value (moisture content (mass%)/BET specific surface area ($m^2$/g)) obtained by dividing the moisture content (mass%) by the BET specific surface area ($m^2$/g) is preferably 0.005 or more and 0.7 or less.

The lower limit value of the value obtained by dividing the moisture content (mass%) by the BET specific surface area ($m^2$/g) is preferably 0.005 or more, more preferably 0.008 or more, and particularly preferably 0.010 or more.

The upper limit value of the value obtained by dividing the moisture content (mass%) by the BET specific surface area ($m^2$/g) is preferably 0.7 or less, more preferably 0.6 or less, and particularly preferably 0.5 or less.

The upper limit value and the lower limit value of the value obtained by dividing the moisture content (mass%) by the BET specific surface area ($m^2$/g) can be randomly combined. In the present embodiment, the value obtained by dividing the moisture content (mass%) by the BET specific surface area ($m^2$/g) is preferably 0.005 or more and 0.7 or less, more preferably 0.008 or more and 0.6 or less, and still more preferably 0.010 or more and 0.5 or less.

The moisture content of the lithium metal composite oxide powder of the present embodiment can be measured from, for example, 1 g of the lithium metal composite oxide powder as a measurement target using a coulometric method Karl Fischer moisture meter (for example, 831 Coulometer manufactured by Metrohm AG).

In the lithium metal composite oxide powder of the present embodiment, from the viewpoint of increasing the discharge capacity while increasing the discharge capacity retention rate at a high current rate, a maximum concentration gradient $R_{Li/M}$ in a range where the mole ratio (Li/element M) between the element concentrations of Li and the element M continuously increases from the particle surface to the particle center is preferably small compared with a maximum concentration gradient $R_{O/M}$ in a range where the mole ratio (O/element M) between the element concentrations of O and the element M continuously increases from the particle surface to the particle center of the lithium metal composite oxide powder (that is, a relationship of $R_{Li/M} < R_{O/M}$ is satisfied).

Regarding $R_{Li/M}$, for the element concentrations from the particle surface to the particle center obtained by the above-described TEM-EELS measurement, the amount of change per nanometer is calculated every measurement point, and the largest value of the amounts of change in the range where the mole ratio (Li/element M) between the element concentrations of Li and the element M continuously increases is defined as the maximum concentration gradient $R_{Li/M}$. In addition, regarding $R_{O/M}$, for the element concentrations from the particle surface to the particle center of the lithium metal composite oxide powder, the amount of change per nanometer is calculated every measurement point, and the largest value of the amounts of change in the range where the mole ratio (O/element M) between the element concentrations of O and the element M continuously increases is defined as the maximum concentration gradient $R_{O/M}$.

The lower limit value of $R_{Li/M}$ is preferably 0.05 or more, more preferably 0.1 or more, and particularly preferably 0.15 or more.

The upper limit value of $R_{Li/M}$ is preferably 5 or less, more preferably 4.5 or less, and particularly preferably 4 or less.

The upper limit value and the lower limit value of $R_{Li/M}$ can be randomly combined. In the present embodiment, $R_{Li/M}$ is preferably 0.05 or more and 5 or less, more preferably 0.1 or more and 4.5 or less, and still more preferably 0.15 or more and 4 or less.

The lower limit value of $R_{O/M}$ is preferably 0.1 or more, more preferably 0.2 or more, and particularly preferably 0.3 or more.

The upper limit value of $R_{O/M}$ is preferably 8 or less, more preferably 6 or less, and particularly preferably 4 or less.

The upper limit value and the lower limit value of $R_{O/M}$ can be randomly combined. In the present embodiment, $R_{O/M}$ is preferably 0.1 or more and 8 or less, more preferably 0.2 or more and 6 or less, and still more preferably 0.3 or more and 4 or less.

(Layered structure)

In the present embodiment, the crystal structure of a positive electrode active material is a layered structure and more preferably a hexagonal crystal structure or a monoclinic crystal structure.

The hexagonal crystal structure belongs to any one space group selected from the group consisting of P3, $P3_1$, P32, R3, P-3, R-3, P312, P321, $P3_1$12, $P3_1$21, P3212, $P3_2$21, R32, P3m1, P31m, P3c1, P31c, R3m, R3c, P-31m, P-31c, P-3m1, P-3c1, R-3m, R-3c, P6, $P6_1$, $P6_5$, $P6_2$, $P6_4$, $P6_3$, P-6, P6/m, $P6_3$/m, P622, $P6_1$22, $P6_5$22, $P6_2$22, $P6_4$22, P6322, P6mm, P6cc, $P6_3$cm, P63mc, P-6m2, P-6c2, P-62m, P-62c, P6/mmm, P6/mcc, $P6_3$/mcm, and $P6_3$/mmc.

In addition, the monoclinic crystal structure belongs to any one space group selected from the group consisting of P2, $P2_1$, C2, Pm, Pc, Cm, Cc, P2/m, $P2_1$/m, C2/m, P2/c, $P2_1$/c, and C2/c.

Among these, in order to obtain a lithium secondary battery having a high discharge capacity, the crystal structure is particularly preferably a hexagonal crystal structure belonging to the space group R-3m, or a monoclinic crystal structure belonging to C2/m.

<Method for producing lithium metal composite oxide powder>

A method for producing the lithium metal composite oxide powder of the present embodiment includes a step of mixing a precursor of a positive electrode active material for a lithium secondary battery and a lithium compound to obtain a mixture, a step of sintering the mixture to obtain a raw material compound, and a step of adding a compound containing the element M to the raw material compound.

[Step of obtaining mixture]

The present step is a step of mixing a lithium compound and the precursor to obtain a mixture.

• Precursor

In the production of the lithium metal composite oxide powder, first, a precursor of a positive electrode active material for a lithium secondary battery is produced.

The precursor is a composite metal compound containing any one or more metals of Ni and the element X (Co, Mn, Fe, Cu, Ti, Mg, Al, W, Mo, Nb, Zn, Sn, Zr, Ga, and V). As the composite metal compound, a composite metal hydroxide or a composite metal oxide is preferable.

Hereinafter, the precursor of a positive electrode active material for a lithium secondary battery will be referred to as "precursor" or "composite metal compound" in some cases.

(Step of producing composite metal compound)

Usually, the composite metal compound can be produced by a well-known batch coprecipitation method or continuous coprecipitation method. Hereinafter, the production method will be described in detail using a composite metal hydroxide containing nickel, cobalt, and manganese as metals as an example.

First, a nickel salt solution, a cobalt salt solution, a manganese salt solution, and a complexing agent are reacted together by a coprecipitation method, particularly, the continuous method described in Japanese Unexamined Patent Application, First Publication No. 2002-201028, thereby producing a nickel cobalt manganese composite metal hydroxide.

A nickel salt that is a solute of the nickel salt solution is not particularly limited, and, for example, any of nickel sulfate, nickel nitrate, nickel chloride, and nickel acetate can be used. As a cobalt salt that is a solute of the cobalt salt solution, for example, any of cobalt sulfate, cobalt nitrate, and cobalt chloride can be used. As a manganese salt that is a solute of the manganese salt solution, for example, any of manganese sulfate, manganese nitrate, and manganese chloride can be used.

The above-described metal salts are used in proportions corresponding to the composition ratio of the formula (A). For example, the nickel salt and (the cobalt salt and the manganese salt) may be used in proportions of (1-z-w):z. In addition, as the solvents of the nickel salt solution, the cobalt salt solution, and the manganese salt solution, water is used.

The complexing agent is an agent capable of forming a complex with ions of nickel, cobalt, and manganese in aqueous solutions. Examples of the complexing agent include ammonium ion feeders (ammonium sulfate, ammonium chloride, ammonium carbonate, ammonium fluoride, and the like), hydrazine, ethylenediaminetetraacetic acid, nitrilotriacetic acid, uracil diacetic acid, and glycine. The complexing agent may or may not be contained. In a case where the complexing agent is contained, for example, the mole ratio of the amount of the complexing agent contained in the liquid mixture containing the nickel salt solution, the cobalt salt solution, the manganese salt solution, and the complexing agent to the total number of moles of the metal salts of nickel, cobalt, and manganese is more than 0 and 2.0 or less.

In the batch coprecipitation method or continuous coprecipitation method, an alkali metal hydroxide (for example, sodium hydroxide or potassium hydroxide) is added as necessary in order to adjust the pH value of the aqueous solution.

At the time of the reaction, the temperature of the reaction vessel is controlled in a range of, for example, 20°C or higher and 80°C or lower and preferably 30°C or higher and 70°C or lower.

The pH value in the reaction vessel is controlled within a range of, for example, pH 9 or higher and pH 13 or lower and preferably pH 11 or higher and pH 13 or lower when the temperature of the aqueous solution is 40°C.

The substances in the reaction vessel are appropriately stirred. As the reaction vessel, it is possible to use a reaction vessel in which the formed reaction precipitate is caused to overflow for separation.

In addition, in the reaction vessel, an appropriate oxygen-containing atmosphere or an oxidizing agent may be present while maintaining an inert atmosphere. In order to create an oxygen-containing atmosphere in the reaction vessel, an oxygen-containing gas may be introduced into the reaction vessel.

As the oxygen-containing gas, oxygen gas, air, or a gas mixture of oxygen gas, air and an oxygen-free gas such as nitrogen gas are exemplary examples. Among these gases, the gas mixture is preferable from the viewpoint of easiness in adjusting the oxygen concentration in the oxygen-containing gas.

When the concentrations, stirring speed, reaction temperature, and reaction pHs of the metal salts that are supplied to the reaction vessel, sintering conditions, which will be described below, and the like are appropriately controlled, it is possible to control a positive electrode active material for a lithium secondary battery to be obtained in the end to desired physical properties.

After the above-described reaction, the obtained reaction precipitate is washed with water and then dried, thereby isolating a nickel cobalt manganese composite hydroxide as a nickel cobalt manganese composite compound. In addition, the reaction precipitate may be washed with a weak acid water or an alkaline solution containing sodium hydroxide or potassium hydroxide as necessary. It should be noted that, in the above-described example, the nickel cobalt manganese composite hydroxide has been produced as a precursor, but a nickel cobalt manganese composite oxide may be prepared. For example, a nickel cobalt manganese composite oxide can be prepared by sintering the nickel cobalt manganese composite hydroxide. Regarding the sintering time, the total time taken while the temperature begins to be raised and reaches the sintering temperature and the holding of the composite metal hydroxide at the sintering temperature ends is preferably set to one hour or longer and 30 hours or shorter. The temperature rising rate in the heating step until the highest holding temperature is reached is preferably 180 °C/hour or faster, more preferably 200 °C/hour or faster, and particularly preferably 250 °C/hour or faster.

At the time of adjusting a composite oxide of nickel and the element X from a composite hydroxide of nickel and the element X (as a specific example of the description herein, the nickel cobalt manganese composite hydroxide), an oxide production step of producing an oxide by sintering the composite hydroxide at a temperature of 300°C or higher and 800°C or lower in a range of one hour or longer and 10 hours or shorter may be carried out.

In the present embodiment, when the concentrations of metal raw material liquids that are supplied to the reaction vessel (that is, all of the metal salt solutions) and an alkaline solution (that is, an alkali metal hydroxide solution) are adjusted such that the volume of the metal raw material liquids becomes large with respect to the volume of the alkaline solution, it is possible to obtain a metal composite hydroxide in which the requirement (1) to the requirement (3) are easily controlled to be within the ranges of the present embodiment.

In the present embodiment, the BET specific surface area of the precursor is 5 m$^2$/g or more and 40 m$^2$/g or less. The BET specific surface area of the precursor can be measured under the same conditions using the same device as for the BET specific surface area of the lithium metal composite oxide powder.

In the present embodiment, the BET specific surface area of the precursor is adjusted to 5 m$^2$/g or more and 40 m$^2$/g or less, whereby it is possible to control the requirement (1) to the requirement (3) to be within the ranges of the present embodiment. The BET specific surface area of the precursor can be adjusted by appropriately controlling the concentrations, stirring speed, reaction temperature, and reaction pHs of the metal salts that are supplied to the reaction vessel, the atmosphere in the reaction vessel, and the like. Specifically, when the concentrations of the metal salts that are supplied to the reaction vessel are set to be high, the stirring speed is set to be slow, the reaction temperature is set to be low, the reaction pH is set to be high, and the atmosphere in the reaction vessel is set to an oxidizing atmosphere, there is a tendency that the BET specific surface area of the precursor increases.

• Lithium compound

As the lithium compound that is used in the present invention, it is possible to use any one of lithium carbonate, lithium nitrate, lithium acetate, lithium hydroxide, lithium oxide, lithium chloride, and lithium fluoride or a mixture of two or more thereof. Among these, any one or both of lithium hydroxide and lithium carbonate are preferable.

In addition, in a case where lithium hydroxide contains lithium carbonate, the content of lithium carbonate in lithium hydroxide is preferably 5 mass% or less.

The method for mixing the precursor and the lithium compound will be described.

The precursor is dried and then mixed with the lithium compound. The drying conditions are not particularly limited, and, for example, any of the following drying conditions 1) to 3) is an exemplary example.

1) Condition under which precursor is not oxidized and reduced. Specifically, a drying condition under which an oxide remains as an oxide as it is or a drying condition under which a hydroxide remains as a hydroxide as it is.
2) Condition under which precursor is oxidized. Specifically, a drying condition under which a hydroxide is oxidized to an oxide.
3) Condition under which precursor is reduced. Specifically, a drying condition under which an oxide is reduced to a hydroxide.

In order to form the condition under which the precursor is not oxidized and reduced, an inert gas such as nitrogen, helium, or argon may be used, and, under the condition under which a hydroxide is oxidized, oxygen or an air may be used.

In addition, under the condition under which the precursor is reduced, a reducing agent such as hydrazine or sodium sulfite may be used in an inert gas atmosphere.

After the precursor is dried, the precursor may be appropriately classified.

The above-described lithium compound and precursor are mixed in consideration of the composition ratio of a final target product. For example, the precursor is mixed with the lithium compound such that the ratio of the number of lithium atoms to the number of metal atoms that are contained in the composite metal oxide or composite metal hydroxide becomes more than 1.0. That is, the lithium compound and the composite metal oxide or composite metal hydroxide are mixed such that the mole ratio between lithium and the total of metal elements other than lithium (the total of nickel and the element X) becomes a ratio of more than one.

The ratio of the number of lithium atoms to the number of metal atoms is preferably 1.05 or more and more preferably 1.10 or more. Further, the ratio is preferably 1.30 or less and more preferably 1.20 or less. The upper limit value and the lower limit value of the ratio of the number of lithium atoms to the number of metal atoms can be randomly combined and may be, for example, 1.05 or more and 1.30 or less or 1.10 or more and 1.20 or less. When the mixture of the precursor and the lithium compound is sintered in the subsequent sintering step, a raw material compound that is a lithium-nickel-containing composite metal oxide is obtained.

[Step of obtaining raw material compound]

The present step is a step of sintering the mixture of the lithium compound and the precursor to obtain a raw material compound.

In the sintering, a dry air, an oxygen atmosphere, an inert atmosphere, or the like is used depending on a desired composition, and a plurality of heating steps is carried out as necessary.

The sintering temperature of the mixture is not particularly limited, but is, for example, preferably 600°C or higher and 1100°C or lower and more preferably 650°C or higher and 1100°C or lower.

When the sintering temperature is equal to or higher than the lower limit value, that is, 600°C or higher, a positive electrode active material for lithium secondary batteries having a strong crystal structure can be obtained. When the sintering temperature is equal to or lower than the upper limit value, that is 1100°C or lower, volatilization of lithium on the surface of the secondary particles can be reduced.

In the present specification, the sintering temperature means the temperature of the atmosphere in a sintering furnace and means the highest temperature of the holding temperatures in a main sintering step (hereinafter, referred to as the highest holding temperature in some cases). In a case of the main sintering step having a plurality of heating steps, the sintering temperature means a temperature at the time of heating the precursor and the liquid compound at the highest holding temperature in each of the heating steps.

The sintering time is preferably three hours or longer and 50 hours or shorter. When the sintering time exceeds 50 hours, there is a tendency that the battery performance substantially deteriorates due to the volatilization of lithium. When the sintering time is shorter than three hours, the development of crystals is poor, and there is a tendency that the battery performance becomes poor. It should be noted that it is also effective to carry out preliminary sintering before the above-described sintering. The temperature of the preliminary sintering is within a range of 300°C or higher and 850°C or lower, and the preliminary sintering is preferably carried out for one to 10 hours.

In the present embodiment, the temperature rising rate in the heating step in which the highest holding temperature is reached is preferably 180 °C/hour or faster, more preferably 200 °C/hour or faster, and particularly preferably 250 °C/hour or faster.

The temperature rising rate in the heating step in which the highest holding temperature is reached is calculated from the time taken while the temperature begins to be raised and then reaches a holding temperature to be described below in a sintering device.

The sintering step preferably has a plurality of heating steps that are carried out at different sintering temperatures. For example, the sintering step preferably has a first sintering stage and a second sintering stage of sintering the precursor and the lithium compound at a higher temperature than in the first sintering stage. Furthermore, the sintering step may have a sintering stage that is carried out at a different sintering temperature for a different sintering time.

When the mixture of the lithium compound and the precursor is sintered as described above, the raw material compound can be obtained.

[Step of adding compound containing element M]

As the compound containing the element M, specifically, $H_2SO_4$, $H_2SO_3$, $H_2S_2O_3$, $H_2SO_6$, $H_2SO_8$, $H_3PO_4$, $H_4P_2O_7$, $H_3PO_3$, $H_3PO_2$, $H_3BO_3$, $HBO_2$, $H_2B_4O_7$, $HB_5O_8$, $B_2O_3$, $H_4SiO_4$, $H_2SiO_3$, $H_2Si_2O_5$, $SiO_2$, and the like are exemplary examples.

The amount of the compound containing the element M mixed is not particularly limited, but may be set to, for example, 0.01 mol% or more and 5 mol% with respect to the total amount (100 mol%) of the raw material compound obtained in the above-described step. When the amount of the compound containing the element M mixed is controlled, it is possible to adjust the composition gradient of the element M (that is, a change in the element concentration of the element M from the particle surface to the particle center) and the element concentration of the element M inside the particle to the ranges of the requirements (1) to (3).

After the compound containing the element M and the raw material compound are mixed together, the mixture is preferably thermally treated in an atmosphere having an adjusted humidity. Specifically, the mixture is preferably thermally treated in an atmosphere in which the relative humidity is adjusted to 0% or more and 30% or less. The thermal treatment time is preferably carried out within a range of 300°C or higher and 500°C or lower for one to 10 hours. When the BET specific surface areas of the metal composite hydroxide and the raw material compound, the thermal treatment temperature, and the thermal treatment time are appropriately controlled, it is possible to control the requirement (1) to the requirement (3) to be within the ranges of the present embodiment.

As an example, in a case where the BET specific surface areas of the metal composite hydroxide (that is, the precursor) and the raw material compound are high, the thermal treatment temperature is set to be low or the thermal treatment time is set to be short, thereby suppressing the diffusion of the element M. Since the state of the element M changes depending on the kind of the element M and the composition of the metal composite hydroxide and the raw material compound, the BET specific surface areas, thermal treatment temperature, and thermal treatment time of the metal composite hydroxide and the raw material compound are appropriately controlled as described above and adjusted such that the lithium metal composite oxide powder of the present embodiment can be obtained.

In addition, in the present embodiment, the thermal treatment is carried out in an atmosphere in which the thermal treatment temperature is adjusted to a temperature lower than the above-described thermal treatment temperature, that is, lower than 300°C and the humidity is adjusted to be low, specifically, a relative humidity of 30% or less, whereby it is possible to control a value obtained by dividing the moisture content (mass%) of the lithium metal composite oxide powder by the BET specific surface area ($m^2/g$) of the lithium metal composite oxide powder. When the thermal treatment is carried out, it is possible to obtain the lithium metal composite oxide powder of the present embodiment.

[Random step]

In the present embodiment, the lithium metal composite oxide powder after the thermal treatment may be washed using pure water, an alkaline washing liquid, or the like as a washing liquid.

As the alkaline washing liquid, for example, aqueous solutions of one or more anhydrides selected from the group consisting of LiOH (lithium hydroxide), NaOH (sodium hydroxide), KOH (potassium hydroxide), $Li_2CO_3$ (lithium carbonate), $Na_2CO_3$ (sodium carbonate), $K_2CO_3$ (potassium carbonate), and $(NH_4)_2CO_3$ (ammonium carbonate) and aqueous solutions of a hydrate of the above-described anhydride are exemplary examples. In addition, as an alkali, it is also possible to use ammonia.

In the washing step, as a method for bringing the washing liquid and the lithium metal composite oxide powder into contact with each other, a method in which the lithium metal composite oxide powder is poured into each washing liquid and stirred, a method in which each washing liquid is applied as shower water to the lithium metal composite oxide powder, and a method in which the lithium metal composite oxide powder is poured into the washing liquid and stirred, then, the lithium metal composite oxide powder is separated from each washing liquid, and then each washing liquid is applied as shower water to the separated lithium metal composite oxide powder are exemplary examples.

The temperature of the washing liquid that is used for the washing is preferably 15°C or lower, more preferably 10°C or lower, and still more preferably 8°C or lower. When the temperature of the washing liquid is controlled in the above-described range to a temperature at which the washing liquid does not freeze, it is possible to suppress the excessive elution of lithium ions from the crystal structure of the lithium metal composite oxide powder into the washing liquid during the washing.

In the present embodiment, at the time of sintering the mixture of the lithium compound and the precursor, the mixture may be sintered in the presence of an inert melting agent.

Sintering of the mixture in the presence of an inert melting agent makes it possible to accelerate the reaction of the mixture. The inert melting agent may remain in the sintered lithium metal composite oxide powder or may be removed by washing the mixture with a washing liquid after the sintering. In the present embodiment, the sintered lithium metal composite oxide powder is preferably washed using pure water or the washing liquid such as an alkaline washing liquid in the presence of the inert melting agent.

In the present embodiment, even in the case of adding the inert melting agent in the step of obtaining the raw material compound, the sintering temperature and the total time may be appropriately adjusted within the above-described ranges.

The inert melting agent that can be used in the present embodiment is not particularly limited as long as the inert melting agent does not easily react with the mixture during the sintering. In the present embodiment, one or more selected from the group consisting of a fluoride of one or more elements selected from the group consisting of Na, K, Rb, Cs, Ca, Mg, Sr, and Ba (hereinafter, referred to as "A"), a chloride of A, a carbonate of A, a sulfate of A, a nitrate of A, a phosphate of A, a hydroxide of A, a molybdate of A, and A of tungstate are exemplary examples.

As the fluoride of A, NaF (melting point: 993°C), KF (melting point: 858°C), RbF (melting point: 795°C), CsF (melting point: 682°C), $CaF_2$ (melting point: 1402°C), $MgF_2$ (melting point: 1263°C), $SrF_2$ (melting point: 1473°C), and $BaF_2$(melting point: 1355°C) can be exemplary examples.

As the chloride of A, NaCl (melting point: 801°C), KCl (melting point: 770°C), RbCl (melting point: 718°C), CsCl (melting point: 645°C), $CaCl_2$ (melting point: 782°C), $MgCl_2$ (melting point: 714°C), $SrCl_2$ (melting point: 857°C), and $BaCl_2$(melting point: 963°C) can be exemplary examples.

As the carbonate of A, $Na_2CO_3$ (melting point: 854°C), $K_2CO_3$ (melting point: 899°C), $Rb_2CO_3$ (melting point: 837°C), $Cs_2CO3$ (melting point: 793°C), $CaCO_3$ (melting point: 825°C), $MgCO_3$ (melting point: 990°C), $SrCO_3$ (melting point: 1497°C), and $BaCO_3$ (melting point: 1380°C) can be exemplary examples.

As the sulfate of A, $Na_2SO_4$ (melting point: 884°C), $K_2SO_4$ (melting point: 1069°C), $Rb_2SO_4$ (melting point: 1066°C), $Cs_2SO_4$ (melting point: 1005°C), $CaSO_4$ (melting point: 1460°C), $MgSO_4$ (melting point: 1137°C), $SrSO_4$ (melting point: 1605°C), and $BaSO_4$ (melting point: 1580°C) can be exemplary examples.

As the nitrate of A, $NaNO_3$ (melting point: 310°C), $KNO_3$ (melting point: 337°C), $RbNO_3$ (melting point: 316°C), $CsNO_3$ (melting point: 417°C), $Ca(NO_3)_2$ (melting point: 561°C), $Mg(NO_3)_2$, $Sr(NO_3)_2$ (melting point: 645°C), and $Ba(NO_3)_2$ (melting point: 596°C) can be exemplary examples.

As the phosphate of A, $Na_3PO_4$, $K_3PO_4$ (melting point: 1340°C), $Rb_3PO_4$, $Cs_3PO_4$, $Ca_3(PO_4)_2$, $Mg_3(PO_4)_2$, (melting point: 1184°C), $Sr_3(PO_4)_2$ (melting point: 1727°C), and $Ba_3(PO_4)_2$ (melting point: 1767°C) can be exemplary examples.

As the hydroxide of A, NaOH (melting point: 318°C), KOH (melting point: 360°C), RbOH (melting point: 301°C), CsOH (melting point: 272°C), $Ca(OH)_2$ (melting point: 408°C), $Mg(OH)_2$ (melting point: 350°C), $Sr(OH)2$ (melting point: 375°C), and $Ba(OH)_2$ (melting point: 853°C) can be exemplary examples.

As the molybdate of A, $Na_2MoO_4$ (melting point: 698°C), $K_2MoO_4$ (melting point: 919°C), $Rb_2MoO_4$ (melting point: 958°C), $Cs_2MoO_4$ (melting point: 956°C), $CaMoO_4$ (melting point: 1520°C), $MgMoO_4$ (melting point: 1060°C), $SrMoO_4$ (melting point: 1040°C), and $BaMoO_4$ (melting point: 1460°C) can be exemplary examples.

As the tungstate of A, $Na_2WO_4$ (melting point: 687°C), $K_2WO_4$, $Rb_2WO_4$, $Cs_2WO_4$, $CaWO_4$, $MgWO_4$, $SrWO_4$, and $BaWO_4$ can be exemplary examples.

In the present embodiment, it is also possible to use two or more of these inert melting agents. In the case of using two or more inert melting agents, there are cases where the melting point decreases. In addition, among these inert melting agents, as an inert melting agent for obtaining a lithium metal composite oxide powder having higher crystallinity, any of the carbonate of A, the sulfate of A, and the chloride of A or a combination thereof is preferable. In addition, A is preferably any one or both of sodium (Na) and potassium (K). That is, among the above-described inert melting agents, a particularly preferable inert melting agent is one or more selected from the group consisting of NaOH, KOH, NaCl, KCl, $Na_2CO_3$, $K_2CO_3$, $Na_2SO_4$, and $K_2SO_4$.

In the present embodiment, potassium sulfate or sodium sulfate is preferable as the inert melting agent.

In the present embodiment, even in the case of adding the inert melting agent in the step of obtaining the raw material compound, the washing may be appropriately adjusted within the above-described range.

The obtained lithium metal composite oxide powder is pulverized, then, appropriately classified, and made into a positive electrode active material for a lithium secondary battery applicable to lithium secondary batteries.

\<Lithium secondary battery\>

Next, the configuration of a lithium secondary battery that is suitable as an application of the positive electrode active material of the present embodiment will be described.

Furthermore, a positive electrode that is suitable as an application of a positive electrode active material for a lithium secondary battery containing the positive electrode active material powder of the present embodiment will be described.

Furthermore, a lithium secondary battery that is suitable as an application of the positive electrode will be described.

An example of the lithium secondary battery that is suitable as an application of the positive electrode active material of the present embodiment has a positive electrode, a negative electrode, a separator interposed between the positive electrode and the negative electrode, and an electrolytic solution disposed between the positive electrode and the negative electrode.

An example of the lithium secondary battery has a positive electrode, a negative electrode, a separator interposed between the positive electrode and the negative electrode, and an electrolytic solution disposed between the positive electrode and the negative electrode.

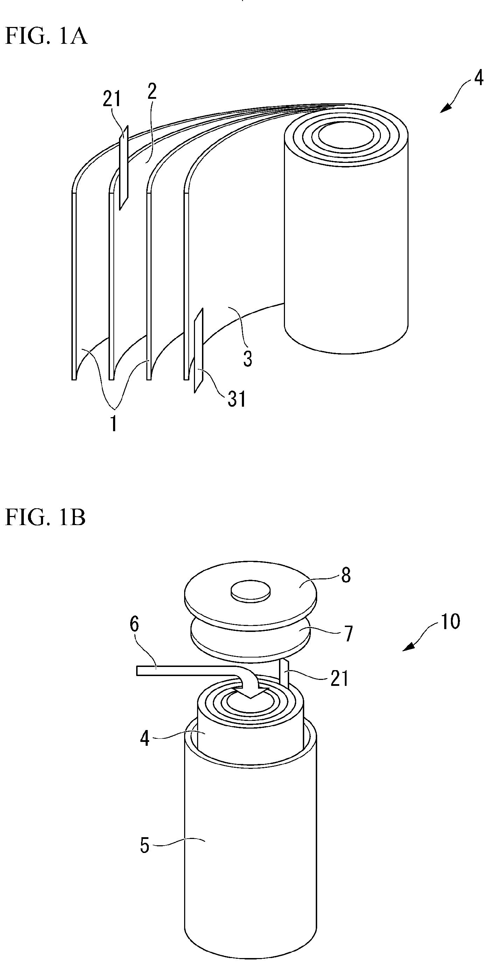

Fig. 1A and Fig. 1B are schematic views showing an example of a lithium secondary battery. A cylindrical lithium secondary battery 10 of the present embodiment is produced as described below.

First, as shown in Fig. 1A, a pair of separators 1 having a strip shape, a strip-shaped positive electrode 2 having a positive electrode lead 21 at one end, and a strip-shaped negative electrode 3 having a negative electrode lead 31 at one end are laminated in order of the separator 1, the positive electrode 2, the separator 1, and the negative electrode 3 and are wound to form an electrode group 4.

Next, as shown in Fig. 1B, the electrode group 4 and an insulator, not shown, are accommodated in a battery can 5, and the can bottom is then sealed. The electrode group 4 is impregnated with an electrolytic solution 6, and an electrolyte is disposed between the positive electrode 2 and the negative electrode 3. Furthermore, the upper portion of the battery can 5 is sealed with a top insulator 7 and a sealing body 8, whereby the lithium secondary battery 10 can be produced.

As the shape of the electrode group 4, for example, a columnar shape in which the cross-sectional shape becomes a circle, an ellipse, a rectangle, or a rectangle with rounded corners when the electrode group 4 is cut in a direction perpendicular to the winding axis is an exemplary example.

In addition, as a shape of the lithium secondary battery having the electrode group 4, a shape specified by 1EC60086, which is a standard for a battery specified by the International Electrotechnical Commission (IEC), or by JIS C 8500 can be adopted. For example, shapes such as a cylindrical type and a square type can be exemplary examples.

Furthermore, the lithium secondary battery is not limited to the winding-type configuration and may be a laminate-type configuration in which the laminated structure of the positive electrode, the separator, the negative electrode, and the separator is repeatedly overlaid. As the laminate-type lithium secondary battery, a so-called coin-type battery, button-type battery, or paper-type (or sheet-type) battery can be an exemplary example.

Hereinafter, each configuration will be described in order.

(Positive electrode)

The positive electrode can be produced by, first, adjusting a positive electrode mixture containing a positive electrode active material, a conductive material, and a binder and supporting the positive electrode mixture by a positive electrode current collector.

(Conductive material)

As the conductive material in the positive electrode, a carbon material can be used. As the carbon material, graphite powder, carbon black (for example, acetylene black), a fibrous carbon material, and the like can be exemplary examples. Since carbon black is fine particles and has a large surface area, the addition of a small amount of carbon black to the positive electrode mixture enhances the conductivity inside the positive electrode and is thus capable of improving the charge and discharge efficiency and output characteristics. However, when the carbon black is added too much, both the binding force between the positive electrode mixture and the positive electrode current collector and the binding force inside the positive electrode mixture by the binder decrease, which conversely causes an increase in internal resistance.

The proportion of the conductive material in the positive electrode mixture is preferably 5 parts by mass or more and 20 parts by mass or less with respect to 100 parts by mass of the positive electrode active material. In the case of using a fibrous carbon material such as a graphitized carbon fiber or a carbon nanotube as the conductive material, it is also possible to decrease the proportion thereof.

(Binder)

As the binder in the positive electrode, a thermoplastic resin can be used. As this thermoplastic resin, fluororesins such as polyvinylidene fluoride (hereinafter, referred to as PVdF in some cases), polytetrafluoroethylene (hereinafter, referred to as PTFE in some cases), tetrafluoroethylene-hexafluoropropylene-vinylidene fluoride-based copolymers, hexafluoropropylene-vinylidene fluoride-based copolymers, and tetrafluoroethylene-perfluorovinyl ether-based copolymers; and polyolefin resins such as polyethylene and polypropylene can be exemplary examples.

Two or more of these thermoplastic resins may be used in a mixture form. When a fluororesin and a polyolefin resin are used as the binder, the ratio of the fluororesin to the entire positive electrode mixture is set to 1 mass% or more and 10 mass% or less, and the ratio of the polyolefin resin is set to 0.1 mass% or more and 2 mass% or less, whereby it is possible to obtain a positive electrode mixture having both a high adhesive force to the positive electrode current collector and a high bonding force inside the positive electrode mixture.

(Positive electrode current collector)

As the positive electrode current collector in the positive electrode, a strip-shaped member formed of a metal material such as Al, Ni, or stainless steel as a forming material can be used. Among these, from the viewpoint of easy processing and low costs, a positive electrode current collector that contains Al as the forming material and is processed into a thin film shape is preferable.

As a method for supporting the positive electrode mixture by the positive electrode current collector, a method in which the positive electrode mixture is formed by pressurization on the positive electrode current collector is an exemplary example. In addition, the positive electrode mixture may be supported by the positive electrode current collector by preparing a paste of the positive electrode mixture using an organic solvent, applying and drying the paste of the positive electrode mixture to be obtained on at least one surface side of the positive electrode current collector, and fixing the positive electrode mixture by pressing.

As the organic solvent that can be used in the case of preparing the paste of the positive electrode mixture, an amine-based solvent such as N,N-dimethylaminopropylamine or diethylenetriamine; an ether-based solvent such as tetrahydrofuran; a ketone-based solvent such as methyl ethyl ketone; an ester-based solvent such as methyl acetate; and an amide-based solvent such as dimethylacetamide or N-methyl-2-pyrrolidone (hereinafter, referred to as NMP in some cases) are exemplary examples.

As a method for applying the paste of the positive electrode mixture to the positive electrode current collector, for example, a slit die coating method, a screen coating method, a curtain coating method, a knife coating method, a gravure coating method, and an electrostatic spraying method are exemplary examples.

The positive electrode can be produced by the method exemplified above.

The positive electrode containing the lithium metal composite oxide powder that satisfies the formula (A) means that, even after kneaded with a slurry-form solvent, a compound in which lithium and oxygen bond to each other remains in the positive electrode, in other words, a coating layer remains.

(Negative electrode)

The negative electrode in the lithium secondary battery needs to be a material which can be doped with lithium ions and from which lithium ions can be de-doped at a potential lower than that of the positive electrode, and an electrode in which a negative electrode mixture containing a negative electrode active material is supported by a negative electrode current collector and an electrode formed of a negative electrode active material alone are exemplary examples.

(Negative electrode active material)

As the negative electrode active material in the negative electrode, materials which are a carbon material, a chalcogen compound (oxide, sulfide, or the like), a nitride, a metal, or an alloy and which can be doped with lithium ions and from which lithium ions can be de-doped at a potential lower than that of the positive electrode are exemplary examples.

As the carbon material that can be used as the negative electrode active material, graphite such as natural graphite or artificial graphite, cokes, carbon black, pyrolytic carbons, a carbon fiber, and a sintered product of an organic polymer compound can be exemplary examples.

As the oxide that can be used as the negative electrode active material, oxides of silicon represented by a formula $SiO_x$ (here, x is a positive real number) such as $SiO_2$ and SiO; oxides of titanium represented by a formula $TiO_x$ (here, x is a positive real number) such as $TiO_2$ and TiO; oxides of vanadium represented by a formula $VO_x$ (here, x is a positive real number) such as $V_2O_5$ and $VO_2$; oxides of iron represented by a formula $FeO_x$ (here, x is a positive real number) such as $Fe_3O_4$, $Fe_2O_3$, and FeO; oxides of tin represented by a formula $SnO_x$ (here, x is a positive real number) such as $SnO_2$ and SnO; oxides of tungsten represented by a general formula $WO_x$ (here, x is a positive real number) such as $WO_3$ and $WO_2$; and composite metal oxides containing lithium and titanium or vanadium such as $Li_4Ti_5O_{12}$ and $LiVO_2$ can be exemplary examples.

As the sulfide that can be used as the negative electrode active material, sulfides of titanium represented by a formula $TiS_x$ (here, x is a positive real number) such as $Ti_2S_3$, $TiS_2$, and TiS; sulfides of vanadium represented by a formula $VS_x$ (here, x is a positive real number) such V3S4, VS2, and VS; sulfides of iron represented by a formula $FeS_x$ (here, x is a positive real number) such as Fe3S4, FeS2, and FeS; sulfides of molybdenum represented by a formula $MoS_x$ (here, x is a positive real number) such as $MO_2S_3$ and $MoS_2$; sulfides of tin represented by a formula $SnS_x$ (here, x is a positive real number) such as SnS2 and SnS; sulfides of tungsten represented by a formula $WS_x$ (here, x is a positive real number) such as $WS_2$; sulfides of antimony represented by a formula $SbS_x$ (here, x is a positive real number) such as $Sb_2S3$; and sulfides of selenium represented by a formula $SeS_x$ (here, x is a positive real number) such as SesS3, SeS2, and SeS can be exemplary examples.

As the nitride that can be used as the negative electrode active material, lithium-containing nitrides such as $Li_3N$ and $Li_{3-x}A_xN$ (here, A is any one or both of Ni and Co, and $0 < x < 3$) can be exemplary examples.

These carbon materials, oxides, sulfides, and nitrides may be used singly or two or more thereof may be jointly used. In addition, these carbon materials, oxides, sulfides, and nitrides may be crystalline or amorphous.

In addition, as the metal that can be used as the negative electrode active material, lithium metal, silicon metal, tin metal, and the like can be exemplary examples.

As the alloy that can be used as the negative electrode active material, lithium alloys such as Li-Al, Li-Ni, Li-Si, Li-Sn, and Li-Sn-Ni; silicon alloys such as Si-Zn; tin alloys such as Sn-Mn, Sn-Co, Sn-Ni, Sn-Cu, and Sn-La; and alloys such as $Cu_2Sb$ and $La_3Ni_2Sn_7$ can also be exemplary examples.

These metals and alloys are used mainly singly as an electrode after being processed into, for example, a foil shape.

Among the above-described negative electrode active materials, the carbon material containing graphite such as natural graphite or artificial graphite as a main component is preferably used for the reason that the potential of the negative electrode rarely changes (the potential flatness is favorable) from a uncharged state to a fully-charged state during charging, the average discharging potential is low, the capacity retention rate at the time of repeatedly charging and discharging the lithium secondary battery is high (the cycle characteristics are favorable), and the like. The shape of the carbon material may be, for example, any of a flaky shape such as natural graphite, a spherical shape such as mesocarbon microbeads, a fibrous shape such as a graphitized carbon fiber, or an aggregate of fine powder.

The negative electrode mixture may contain a binder as necessary. As the binder, thermoplastic resins can be exemplary examples, and specifically, PVdF, thermoplastic polyimide, carboxymethylcellulose, polyethylene, and polypropylene can be exemplary examples.

(Negative electrode current collector)

As the negative electrode current collector in the negative electrode, a strip-shaped member formed of a metal material such as Cu, Ni, or stainless steel as the forming material can be an exemplary example. Particularly, a negative electrode current collector that is formed of Cu as a forming material and processed into a thin film shape is preferable since the negative electrode current collector does not easily produce an alloy with lithium and is easy to process.

As a method for supporting the negative electrode mixture by the negative electrode current collector, similar to the case of the positive electrode, a method in which the negative electrode mixture is formed by pressurization and a method in which a paste of the negative electrode mixture is prepared using a solvent or the like, applied and dried on the negative electrode current collector, and then the negative electrode mixture is compressed by pressing are exemplary examples.

(Separator)

As the separator in the lithium secondary battery, it is possible to use, for example, a material that is made of a material such as a polyolefin resin such as polyethylene or polypropylene, a fluororesin, or a nitrogen-containing aromatic polymer and has a form such as a porous film, a non-woven fabric, or a woven fabric. In addition, the separator may be formed using two or more of these materials or the separator may be formed by laminating these materials.

In the present embodiment, the air resistance of the separator by the Gurley method specified by JIS P 8117 is preferably 50 sec/100 cc or more and 300 sec/100 cc or less and more preferably 50 sec/100 cc or more and 200 sec/100 cc or less in order to favorably transmit the electrolyte while the battery is in use (while the battery is being charged and discharged).

In addition, the porosity of the separator is preferably 30 vol% or more and 80 vol% or less and more preferably 40 vol% or more and 70 vol% or less with respect to the total volume of the separator. The separator may be a laminate of separators having different porosities.

(Electrolytic solution)

The electrolytic solution in the lithium secondary battery contains an electrolyte and an organic solvent.

As the electrolyte that is contained in the electrolytic solution, lithium salts such as $LiClO_4$, $LiPF_6$, $LiAsF_6$, $LiSbF_6$, $LiBF_4$, $LiCF_3SO_3$, $LiN(SO_2CF_3)_2$, $LiN(SO_2C_2F_5)_2$, $LiN(SO_2CF_3)(COCF_3)$, $Li(C_4F_9SO_3)$, $LiC(SO_2CF_3)_3$, $Li_2B_{10}Cl_{10}$, LiBOB (here, BOB represents bis(oxalato)borate), LIFSI (here, FSI represents bis(fluorosulfonyl)imide), lower aliphatic carboxylic acid lithium salts, and $LiAlCl_4$ are exemplary examples, and a mixture of two or more thereof may be used. Among these, as the electrolyte, at least one selected from the group consisting of $LiPF_6$, $LiAsF_6$, $LiSbF_6$, $LiBF_4$, $LiCF_3SO_3$, $LiN(SO_2CF_3)_2$, and $LiC(SO_2CF_3)_3$, which contain fluorine, is preferably used.

In addition, as the organic solvent that is contained in the electrolytic solution, it is possible to use, for example, carbonates such as propylene carbonate, ethylene carbonate, dimethyl carbonate, diethyl carbonate, ethyl methyl carbonate, 4-trifluoromethyl-1,3-dioxolan-2-one, and 1,2-di(methoxycarbonyloxy)ethane; ethers such as 1,2-dimethoxyethane, 1,3-dimethoxypropane, pentafluoropropyl methyl ether, 2,2,3,3-tetrafluoropropyl difluoromethyl ether, tetrahydrofuran, and 2-methyltetrahydrofuran; esters such as methyl formate, methyl acetate, and γ-butyrolactone; nitriles such as acetonitrile and butyronitrile; amides such as N,N-dimethylformamide and N,N-dimethylacetamide; carbamates such as 3-methyl-2-oxazolidone; sulfur-containing compounds such as sulfolane, dimethyl sulfoxide, and 1,3-propanesultone, or these organic solvents into which a fluoro group is further introduced (the organic solvents in which one or more hydrogen atoms in the organic solvent are substituted with a fluorine atom).

As the organic solvent, two or more of the above-described organic solvents are preferably used in a mixture form. Among these, a mixed solvent containing a carbonate is preferable, and a mixed solvent of a cyclic carbonate and a non-cyclic carbonate and a mixed solvent of a cyclic carbonate and an ether are more preferable. As the mixed solvent of a cyclic carbonate and a non-cyclic carbonate, a mixed solvent containing ethylene carbonate, dimethyl carbonate, and ethyl methyl carbonate is preferable. The electrolytic solution for which such a mixed solvent is used has a number of features as follows: the electrolytic solution has a broad operating temperature range, does not easily deteriorate even when the lithium secondary battery is charged and discharged at a high current rate, does not easily deteriorate even after used for a long period of time, and does not easily dissolve even in a case where a graphite material such as natural graphite or artificial graphite is used as an active material for the negative electrode.

Furthermore, as the electrolytic solution, it is preferable to use an electrolytic solution containing a lithium salt containing fluorine such as $LiPF_6$ and an organic solvent having a fluorine substituent in order to enhance the safety of the obtained lithium secondary battery. A mixed solvent containing an ether having a fluorine substituent such as pentafluoropropyl methyl ether or 2,2,3,3-tetrafluoropropyl difluoromethyl ether and dimethyl carbonate is still more preferable since the capacity retention rate is high even when the lithium secondary battery is charged and discharged at a high current rate.

In the lithium secondary battery having the above-described configuration, since the lithium metal composite oxide powder that is produced by the above-described present embodiment is used in the positive electrode active material, it is possible to improve the cycle retention rate of the lithium secondary battery for which this positive electrode active material is used.

In addition, since the positive electrode having the above-described configuration has the positive electrode active material for a lithium secondary battery having the above-described configuration, it is possible to improve the cycle retention rate of the lithium secondary battery.

Furthermore, the lithium secondary battery having the above-described configuration has the above-described positive electrode and thus becomes a secondary battery having a high cycle retention rate.

<All-solid-state lithium secondary battery>

Next, a positive electrode for which a positive electrode active material for a secondary battery according to an aspect of the present invention is used as a positive electrode active material for an all-solid-state lithium secondary battery and an all-solid-state lithium secondary battery having this positive electrode will be described while describing the configuration of the all-solid-state lithium secondary battery.

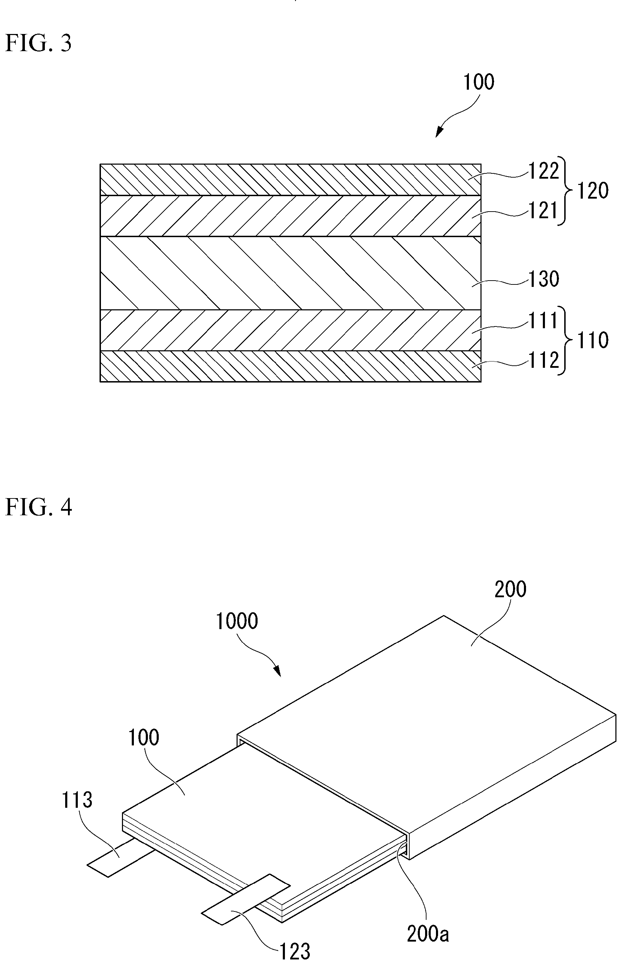

Fig. 3 and Fig. 4 are schematic views showing an example of an all-solid-state lithium secondary battery of the present embodiment. An all-solid-state secondary battery 1000 shown in Fig. 3 and Fig. 4 has a laminate 100 having a positive electrode 110, a negative electrode 120, and a solid electrolyte layer 130 and an exterior body 200 accommodating the laminate 100. A material that configures each member will be described below.

The laminate 100 may have an external terminal 113 that is connected to a positive electrode current collector 112 and an external terminal 123 that is connected to a negative electrode current collector 122. In addition, the all-solid-state secondary battery 1000 may have a separator between the positive electrode 110 and the negative electrode 120.

The all-solid-state secondary battery 1000 further has an insulator, not shown, that insulates the laminate 100 and the exterior body 200 from each other and a sealant, not shown, that seals an opening portion 200a of the exterior body 200.

As the exterior body 200, a container formed of a highly corrosion-resistant metal material such as aluminum, stainless steel or nickel-plated steel can be used. In addition, as the exterior body 200, a container obtained by processing a laminate film having at least one surface on which a corrosion resistant process has been carried out into a bag shape can also be used.

As the shape of the all-solid-state lithium secondary battery 1000, for example, shapes such as a coin type, a button type, a paper type (or a sheet type), a cylindrical type, a square type, and a laminate type (pouch type) can be exemplary examples.

As an example of the all-solid-state secondary battery 1000, a form in which one laminate 100 is provided is shown in the drawings, but the present embodiment is not limited thereto. The all-solid-state secondary battery 1000 may have a configuration in which the laminate 100 is used as a unit cell and a plurality of unit cells (laminates 100) is sealed inside the exterior body 200.

Hereinafter, each configuration will be described in order.

(Positive electrode)

The positive electrode 110 of the present embodiment has a positive electrode active material layer 111 and a positive electrode current collector 112.

The positive electrode active material layer 111 contains the positive electrode active material, which is one aspect of the present invention described above, and a solid electrolyte. In addition, the positive electrode active material layer 111 may contain a conductive material and a binder.

(Solid electrolyte)

As the solid electrolyte that is contained in the positive electrode active material layer 111 of the present embodiment, a solid electrolyte that is lithium ion-conductive and used in well-known all-solid-state batteries can be adopted. As the solid electrolyte, an inorganic electrolyte and an organic electrolyte can be exemplary examples. As the inorganic electrolyte, an oxide-based solid electrolyte, a sulfide-based solid electrolyte, and a hydride-based solid electrolyte can be exemplary examples. As the organic electrolyte, polymer-based solid electrolytes are exemplary examples.

(Oxide-based solid electrolyte)

As the oxide-based solid electrolyte, for example, a perovskite-type oxides, a NASICON-type oxide, a LISICON-type oxide, a garnet-type oxides, and the like are exemplary examples.

As the perovskite-type oxide, Li-La-Ti-based oxides such as $Li_aLa_{1-a}TiO_3$ (0 < a < 1), Li-La-Ta-based oxides such as $Li_bLa_{1-b}TaO_3$ (0 < b < 1), Li-La-Nb-based oxides such as $Li_cLa_{1-c}NbO_3$ (0 < c < 1), and the like are exemplary examples.

As the NASICON-type oxide, $Li_{1+d}Al_dTi_{2-d}(PO_4)_3$ ($0 \leq d \leq 1$) and the like are exemplary examples. The NASICON-type oxide is an oxide represented by $Li_mM^1_nM^2_oP_pO_q$ (in the formula, $M^1$ is one or more elements selected from the group consisting of B, Al, Ga, In, C, Si, Ge, Sn, Sb, and Se. $M^2$ is one or more elements selected from the group consisting of Ti, Zr, Ge, In, Ga, Sn, and Al. m, n, o, p, and q are random positive numbers).

As the LISICON-type oxide, oxides represented by $Li_4M^3O_4$-$Li_3M^4O_4$ ($M^3$ is one or more elements selected from the group consisting of Si, Ge, and Ti. $M^4$ is one or more elements selected from the group consisting of P, As, and V) and the like are exemplary examples.

As the garnet-type oxide, Li-La-Zr-based oxides such as $Li_7La_3Zr_2O_{12}$ (also referred to as LLZ) are exemplary examples.

The oxide-based solid electrolyte may be a crystalline material or an amorphous material.

(Sulfide-based solid electrolyte)

As the sulfide-based solid electrolyte, $Li_2S$-$P_2S_5$-based compounds, $Li_2S$-$SiS_2$-based compounds, $Li_2S$-$GeS_2$-based compounds, $Li_2S$-$B_2S_3$-based compounds, $Li_2S$-$P_2S_3$-based compounds, $LiI$-$Si_2S$-$P_2S_5$, $LiI$-$Li_2S$-$P_2O_5$, $LiI$-$Li_3PO_4$-$P_2S_5$, $Li_{10}GeP_2S_{12}$, and the like can be exemplary examples.

It should be noted that, in the present specification, the expression "-based compound" that indicates the sulfide-based solid electrolyte is used as a general term for solid electrolytes mainly containing a raw material written before "-based compound" such as "$Li_2S$" or "$P_2S_5$". For example, the $Li_2S$-$P_2S_5$-based compounds include solid electrolytes mainly containing $Li_2S$ and $P_2S_5$ and further containing a different raw material. The proportion of $Li_2S$ that is contained in the $Li_2S$-$P_2S_5$-based compound is, for example, 50 to 90 mass% with respect to the entire $Li_2S$-$P_2S_5$-based compound. The proportion of $P_2S_5$ that is contained in the $Li_2S$-$P_2S_5$-based compound is, for example, 10 to 50 mass% with respect to the entire $Li_2S$-$P_2S_5$-based compound. In addition, the proportion of the different raw material that is contained in the $Li_2S$-$P_2S_5$-based compound is, for example, 0 to 30 mass% with respect to the entire $Li_2S$-$P_2S_5$-based compound. In addition, the $Li_2S$-$P_2S_5$-based compounds also include solid electrolytes containing $Li_2S$ and $P_2S_5$ in different mixing ratios.

As the $Li_2S$-$P_2S_5$-based compounds, $Li_2S$-$P_2S_5$, $Li_2S$-$P_2S_5$-$LiI$, $Li_2S$-$P_2S_5$-$LiCl$, $Li_2S$-$P_2S_5$-$LiBr$, $Li_2S$-$P_2S_5$-$Li_2O$, $Li_2S$-$P_2S_5$-$Li_2O$-$LiI$, $Li_2S$-$P_2S_5$-$Z_mS_n$ (m and n are positive numbers. Z is Ge, Zn, or Ga.), and the like are exemplary examples.

As the $Li_2S$-$SiS_2$-based compounds, $Li_2S$-$SiS_2$, $Li_2S$-$SiS_2$-$LiI$, $Li_2S$-$SiS_2$-$LiBr$, $Li_2S$-$SiS_2$-$LiCl$, $Li_2S$-$SiS_2$-$B_2S_3$-$LiI$, $Li_2S$-$SiS_2$-$P_2S_5$-$LiI$, $Li_2S$-$SiS_2$-$Li_3PO_4$, $Li_2S$-$SiS_2$-$Li_2SO_4$, $Li_2S$-$SiS_2$-$Li_xMO_y$ (x and y are positive numbers. M is P, Si, Ge, B, Al, Ga, or In.), and the like are exemplary examples.

As the $Li_2S$-$GeS_2$-based compounds, include $Li_2S$-$GeS_2$, $Li_2S$-$GeS_2$-$P_2S_5$, and the like are exemplary examples.

The sulfide-based solid electrolyte may be a crystalline material or an amorphous material.

(Hydride-based solid electrolyte)

As the hydride-based solid electrolyte material, $LiBH_4$, $LiBH_4$-$3KI$, $LiBH_4$-$PI_2$, $LiBH_4$-$P_2S_5$, $LiBH_4$-$LiNH_2$, $3LiBH_4$-$LiI$, $LiNH_2$, $Li_2AlH_6$, $Li(NH_2)_2I$, $Li_2NH$, $LiGd(BH_4)_3Cl$, $Li_2(BH_4)(NH_2)$, $Li_3(NH_2)I$, $Li_4(BH_4)(NH_2)_3$, and the like can be exemplary examples.

(Polymer-based solid electrolyte)

As the polymer-based solid electrolyte, for example, organic polymer electrolytes such as polymer compounds containing one or more selected from the group consisting of a polyethylene oxide-based polymer compound, a polyorganosiloxane chain, and a polyoxyalkylene chain can be exemplary examples. In addition, it is also possible to use a so-called gel-type solid electrolyte in which a non-aqueous electrolytic solution is held in the polymer compound.

Two or more solid electrolytes can be jointly used as long as the effect of the invention is not impaired.

(Conductive material)

As the conductive material in the positive electrode active material layer 111 of the present embodiment, at least one of a carbon material and a metal compound can be used. As the carbon material, graphite powder, carbon black (for example, acetylene black), a fibrous carbon material, and the like can be exemplary examples. Since carbon black is fine particles and has a large surface area, the addition of carbon black in an appropriate amount, which will be described below, to the positive electrode active material layer 111 makes it possible to enhance the conductivity inside the positive electrode 110 and to improve the charge and discharge efficiency and output characteristics. On the other hand, when the amount of carbon black added is too large, both the binding force between the positive electrode active material layer 111 and the positive electrode current collector 112 and the binding force inside the positive electrode active material layer 111 decrease, which conversely causes an increase in internal resistance. In addition, as the metal compound, metals, metal alloys, and metal oxides, all of which are electrically conductive, are exemplary examples.

In the case of the carbon material, the proportion of the conductive material in the positive electrode active material layer 111 is preferably 5 parts by mass or more and 20 parts by mass or less with respect to 100 parts by mass of the positive electrode active material. In the case of using a fibrous carbon material such as a graphitized carbon fiber or a carbon nanotube as the conductive material, it is also possible to decrease the proportion thereof.

(Binder)

In a case where the positive electrode active material layer 111 has a binder, a thermoplastic resin can be used as the binder. As this thermoplastic resin, polyimide-based resins; fluororesins such as polyvinylidene fluoride (hereinafter, referred to as PVdF in some cases), polytetrafluoroethylene (hereinafter, referred to as PTFE in some cases), tetrafluoroethylene-hexafluoropropylene-vinylidene fluoride-based copolymers, hexafluoropropylene-vinylidene fluoride-based copolymers, and tetrafluoroethylene-perfluorovinyl ether-based copolymers; and polyolefin resins such as polyethylene and polypropylene can be exemplary examples.
Two or more of these thermoplastic resins may be used in a mixture form. When a fluororesin and a polyolefin resin are used as the binder, the ratio of the fluororesin to the entire positive electrode active material layer 111 is set to 1 mass% or more and 10 mass% or less, and the ratio of the polyolefin resin is set to 0.1 mass% or more and 2 mass% or less, the positive electrode active material layer 111 has both a high adhesive force between the positive electrode active material layer 111 and the positive electrode current collector 112 and a high bonding force inside the positive electrode active material layer 111.

(Positive electrode current collector)

As the positive electrode current collector 112 in the positive electrode 110 of the present embodiment, a strip-shaped member formed of a metal material such as Al, Ni, or stainless steel as a forming material can be used. Among these, from the viewpoint of easy processing and low costs, a member that contains Al as the forming material and is processed into a thin film shape is preferable.
As a method for supporting the positive electrode active material layer 111 by the positive electrode current collector 112, a method in which the positive electrode active material layer 111 is formed by pressurization on the positive electrode current collector 112 is an exemplary example. A cold press or a hot press can be used to form the positive electrode active material layer 111 by pressurization.
In addition, the positive electrode active material layer 111 may be supported by the positive electrode current collector 112 by preparing a paste of a mixture of the positive electrode active material, the solid electrolyte, the conductive material, and the binder using an organic solvent to produce a positive electrode mixture, applying and drying the positive electrode mixture to be obtained on at least one surface of the positive electrode current collector 112, and fixing the positive electrode mixture by pressing.
In addition, the positive electrode active material layer 111 may be supported by the positive electrode current collector 112 by preparing a paste of a mixture of the positive electrode active material, the solid electrolyte, and the conductive material using an organic solvent to produce a positive electrode mixture, applying and drying the positive electrode mixture to be obtained on at least one surface of the positive electrode current collector 112, and sintering the positive electrode mixture.
As the organic solvent that can be used in the positive electrode mixture, amine-based solvents such as N,N-dimethylaminopropylamine and diethylenetriamine; ether-based solvents such as tetrahydrofuran; ketone-based solvents such as methyl ethyl ketone; ester-based solvents such as methyl acetate; and amide-based solvents such as dimethylacetamide and N-methyl-2-pyrrolidone (hereinafter, referred to as NMP in some cases) are exemplary examples.
As a method for applying the positive electrode mixture to the positive electrode current collector 112, for example, a slit die coating method, a screen coating method, a curtain coating method, a knife coating method, a gravure coating method, and an electrostatic spraying method are exemplary examples.
The positive electrode 110 can be produced by the method exemplified above.

(Negative electrode)

The negative electrode 120 has a negative electrode active material layer 121 and the negative electrode current collector 122. The negative electrode active material layer 121 contains a negative electrode active material. In addition, the negative electrode active material layer 121 may contain a solid electrolyte and a conductive material. As the solid electrolyte, the conductive material, and a binder, those described above can be used.

(Negative electrode active material)

As the negative electrode active material in the negative electrode active material layer 121, materials which are a carbon material, a chalcogen compound (oxide, sulfide, or the like), a nitride, a metal, or an alloy and which can be doped with lithium ions and from which lithium ions can be de-doped at a potential lower than that of the positive electrode 110 are exemplary examples.

As the carbon material that can be used as the negative electrode active material, graphite such as natural graphite and artificial graphite, cokes, carbon black, pyrolytic carbons, a carbon fiber, and a sintered product of an organic polymer compound can be exemplary examples.

As the oxide that can be used as the negative electrode active material, oxides of silicon represented by a formula $SiO_x$ (here, x is a positive real number) such as $SiO_2$ and SiO; oxides of titanium represented by a formula $TiO_x$ (here, x is a positive real number) such as $TiO_2$ and TiO; oxides of vanadium represented by a formula $VO_x$ (here, x is a positive real number) such as $V_2O_5$ and $VO_2$; oxides of iron represented by a formula $FeO_x$ (here, x is a positive real number) such as $Fe_3O_4$, $Fe_2O_3$, and FeO; oxides of tin represented by a formula $SnO_x$ (here, x is a positive real number) such as $SnO_2$ and SnO; oxides of tungsten represented by a general formula $WO_x$ (here, x is a positive real number) such as $WO_3$ and $WO_2$; and metal composite oxides containing lithium and titanium or vanadium such as $Li_4Ti_5O_{12}$ and $LiVO_2$ can be exemplary examples.

As the sulfide that can be used as the negative electrode active material, sulfides of titanium represented by a formula $TiS_x$ (here, x is a positive real number) such as $Ti_2S_3$, $TiS_2$, and TiS; sulfides of vanadium represented by a formula $VS_x$ (here, x is a positive real number) such V3S4, VS2, and VS; sulfides of iron represented by a formula $FeS_x$ (here, x is a positive real number) such as Fe3S4, FeS2, and FeS; sulfides of molybdenum represented by a formula $MoS_x$ (here, x is a positive real number) such as $Mo_2S_3$ and $MoS_2$; sulfides of tin represented by a formula $SnS_x$ (here, x is a positive real number) such as SnS2 and SnS; sulfides of tungsten represented by a formula $WS_x$ (here, x is a positive real number) such as $WS_2$; sulfides of antimony represented by a formula $SbS_x$ (here, x is a positive real number) such as $Sb_2S_3$; and sulfides of selenium represented by a formula $SeS_x$ (here, x is a positive real number) such as SesS3, SeS2, and SeS can be exemplary examples.

As the nitride that can be used as the negative electrode active material, lithium-containing nitrides such as $Li_3N$ and $Li_{3-x}A_xN$ (here, A is any one or both of Ni and Co, and $0 < x < 3$) can be exemplary examples.

These carbon materials, oxides, sulfides, and nitrides may be used singly or two or more thereof may be jointly used. In addition, these carbon materials, oxides, sulfides, and nitrides may be crystalline or amorphous.

In addition, as the metal that can be used as the negative electrode active material, lithium metal, silicon metal, tin metal, and the like can be exemplary examples.

As the alloy that can be used as the negative electrode active material, lithium alloys such as Li-Al, Li-Ni, Li-Si, Li-Sn, and Li-Sn-Ni; silicon alloys such as Si-Zn; tin alloys such as Sn-Mn, Sn-Co, Sn-Ni, Sn-Cu, and Sn-La; and alloys such as $Cu_2Sb$ and $La_3Ni_2Sn_7$ can also be exemplary examples.

These metals and alloys are used mainly singly as an electrode after being processed into, for example, a foil shape.

Among the above-described negative electrode active materials, the carbon material containing graphite such as natural graphite or artificial graphite as a main component is preferably used for the reason that the potential of the negative electrode 120 rarely changes (that is, the potential flatness is favorable) from a uncharged state to a fully-charged state during charging, the average discharging potential is low, the capacity retention rate at the time of repeatedly charging and discharging the lithium secondary battery is high (that is, the cycle characteristics are favorable), and the like. The shape of the carbon material may be, for example, any of a flaky shape such as natural graphite, a spherical shape such as mesocarbon microbeads, a fibrous shape such as a graphitized carbon fiber, or an aggregate of fine powder.

In addition, among the above-described negative electrode active materials, the oxides are preferably used since the thermal stability is high and dendrites (also referred to as dendritic crystals) are not easily generated by Li metal. As the shape of the oxide, a fibrous or fine powder aggregate is preferably used.

(Negative electrode current collector)

As the negative electrode current collector 122 in the negative electrode 120, a strip-shaped member formed of a metal material such as Cu, Ni, or stainless steel as the forming material can be an exemplary example. Particularly, a member that is formed of Cu as a forming material and processed into a thin film shape is preferable since the negative electrode current collector does not easily produce an alloy with lithium and is easy to process.

As a method for supporting the negative electrode active material layer 121 by the negative electrode current collector 122, similar to the case of the positive electrode 110, a method in which the negative electrode active material layer 121 is formed by pressurization, a method in which a paste-form negative electrode mixture containing a negative electrode active material is applied and dried on the negative electrode current collector 122 and then the negative electrode active material layer 121 is compressed by pressing, and a method in which a paste-form negative electrode mixture containing a negative electrode active material is applied, dried and then sintered on the negative electrode current collector 122 are exemplary examples.

(Solid electrolyte layer)

The solid electrolyte layer 130 has the above-described solid electrolyte.
The solid electrolyte layer 130 can be formed by depositing a solid electrolyte of an inorganic substance on the surface of the positive electrode active material layer 111 in the above-described positive electrode 110 by a sputtering method.
In addition, the solid electrolyte layer 130 can be formed by applying and drying a paste-form mixture containing a solid electrolyte on the surface of the positive electrode active material layer 111 in the above-described positive electrode 110. The solid electrolyte layer 130 may be formed by pressing the dried paste-form mixture and further pressurizing the paste-form mixture by a cold isostatic pressure method (CIP).
The laminate 100 can be produced by laminating the negative electrode 120 on the solid electrolyte layer 130 provided on the positive electrode 110 as described above using a well-known method such that the negative electrode electrolyte layer 121 comes into contact with the surface of the solid electrolyte layer 130.
Another aspect of the present invention is as follows.
[11] A lithium metal composite oxide powder having a layered crystal structure, containing at least Li, Ni, an element X, and an element M, in which the element X is one or more elements selected from the group consisting of Co, Mn, Fe, Cu, Ti, Mg, Al, W, Mo, Nb, Zn, Sn, Zr, Ga, and V, the element M is one or more elements selected from the group consisting of B, Si, S, and P, a ratio of a content of the element M to a total amount of Ni and the element X in the lithium metal composite oxide powder is 0.03 mol% or more and 1.0 mol% or less, a ratio of a content of Ni to the total amount of Ni and the element X, which is indicated by Ni/(Ni + X), is 0.55 or more and 0.90 or less in terms of a mole ratio, and the following (1), (2), and (3) are satisfied.

(1) A mole ratio between element concentrations of Li and the element M that is indicated by Li/element M continuously increases from a particle surface to a particle center of the lithium metal composite oxide powder.
(2) A mole ratio between element concentrations of O and the element M that is indicated by O/element M continuously increases from the particle surface to the particle center of the lithium metal composite oxide powder.
(3) A mole ratio between the element concentrations of the element M and O that is indicated by element M/O inside the particle of the lithium metal composite oxide powder is 0.0001 or more and 0.009 or less.

[12] The lithium metal composite oxide powder according to [11] that is represented by the following composition formula (A).

$$Li[Li_{n1}(Ni_{(1-z-w)}X_zM_w)_{1-n1}]O_2 \ (A)$$

(Here, X is one or more elements selected from the group consisting of Co, Mn, Fe, Cu, Ti, Mg, Al, W, Mo, Nb, Zn, Sn, Zr, Ga, and V, M is one or more elements selected from the group consisting of B, Si, S, and P, and $0.003 \leq n1 \leq 0.17$, $0.02 \leq z \leq 0.37$, and $0.002 \leq w \leq 0.07$ are satisfied.)
[13] The lithium metal composite oxide powder according to [11] or [12], in which a BET specific surface area of the lithium metal composite oxide powder is 0.05 $m^2/g$ or more and 1.2 $m^2/g$ or less.
[14] The lithium metal composite oxide powder according to any one of [11] to [13], in which an average primary particle diameter is 1 $\mu$m or more and 6 $\mu$m or less.
[15] The lithium metal composite oxide powder according to any one of [11] to [14], in which, in a 10% cumulative diameter ($D_{10}$), a 50% cumulative diameter ($D_{50}$), and a 90% cumulative diameter ($D_{90}$), all of which are obtained from particle size distribution measurement values, the 50% cumulative diameter ($D_{50}$) is 2 $\mu$m or more and 10 $\mu$m or less, and furthermore, a relationship of the following formula (B) is satisfied.

$$0.55 \leq (D_{90} - D_{10}) / D_{50} \leq 1.5 \ ... \ (B)$$

[16] The lithium metal composite oxide powder according to any one of [11] to [15], in which a value obtained by dividing a moisture content (mass%) by a BET specific surface area ($m^2/g$) that is indicated by moisture content (mass%)/BET specific surface area ($m^2/g$) is 0.010 or more and 0.5 or less.
[17] The lithium metal composite oxide powder according to any one of [11] to [16], in which a maximum concentration gradient $R_{Li/M}$ in a range where the mole ratio between the element concentrations of Li and the element M that is indicated by Li/element M continuously increases from the particle surface to the particle center of the lithium metal composite oxide powder is small compared with a maximum concentration gradient $R_{O/M}$ in a range where the mole ratio between the element concentrations of O and the element M that is indicated by O/element M continuously increases from the particle surface to the particle center of the lithium metal composite oxide powder ($R_{O/M} > R_{Li/M}$).

[18] The lithium metal composite oxide powder according to any one of [11] to [17], in which, when a positive electrode for a lithium secondary battery in which a mass ratio of the lithium metal composite oxide powder, acetylene black, and PVdF is 92:5:3 (lithium metal composite oxide powder:acetylene black:PVdF) and an electrode area is 1.65 $cm^2$ is formed, a coin-type battery R2032 including the positive electrode for a secondary battery, a separator of a polyethylene porous film, an electrolytic solution obtained by dissolving $LiPF_6$ in a liquid mixture of ethylene carbonate, dimethyl carbonate, and ethyl methyl carbonate in a volume ratio of 30:35:35 to reach 1.0 mol/l, and a negative electrode for a secondary battery made of lithium metal is produced, and, when a discharge rate test is carried out on the coin-type battery R2032 as described below under charge and discharge test conditions described below, a 10 CA/0.2 CA discharge capacity rate to be obtained is 60% to 98%.

• Discharge rate test

    Testing temperature: 25°C
    Maximum charging voltage: 4.3 V, charging current: 1 CA, constant-current constant-voltage charging
    Minimum discharging voltage: 2.5 V, discharging current: 0.2 CA or 10 CA, constant-current-discharging

[19] A positive electrode active material for a lithium secondary battery, containing the lithium metal composite oxide powder according to any one of [11] to [18].

Furthermore, as a different aspect of the present invention, the following aspects are exemplary examples.

[20] A positive electrode for a lithium secondary battery, containing the positive electrode active material for a lithium secondary battery according to [19]

[21] A lithium secondary battery having the positive electrode for a lithium secondary battery according to [20].

[Examples]

Next, the present invention will be described in more detail using examples.

<Composition analysis>

The composition analysis of a lithium metal composite oxide powder that was produced by a method, which will be described below, was carried out using an inductively coupled plasma emission spectrometer (SPS3000, manufactured by Seiko Instruments Inc.) after the obtained lithium metal composite oxide powder was dissolved in hydrochloric acid.

<Measurement of BET specific surface area>

The BET specific surface area was measured using a BET specific surface area meter (Macsorb (registered trademark) manufactured by Mountech Co., Ltd.) after drying 1 g of the lithium metal composite oxide powder in a nitrogen atmosphere at 105°C for 30 minutes (unit: $m^2/g$).

<Measurement of average primary particle diameter>

The lithium metal composite oxide powder was placed on a conductive sheet attached onto a sample stage and SEM-observed with a scanning electron microscope (JSM-5510 manufactured by JEOL Ltd.) while being irradiated with an electron beam at an accelerating voltage of 20 kV. 50 primary particles were randomly extracted from an image (SEM photograph) obtained by the SEM observation, and, for each of the primary particles, the distance (unidirectional diameter) between parallel lines sandwiched between the parallel lines drawn on a projected image of the primary particles in a certain direction was measured as the particle diameter of the primary particle. The arithmetic average value of the obtained particle diameters of the primary particles was regarded as the average primary particle diameter of the lithium metal composite oxide powder.

<Measurement of particle size distribution of lithium metal composite oxide powder>

0.1 g of the lithium metal composite oxide powder to be measured was put into 50 ml of 0.2 mass% sodium hexametaphosphate aqueous solution to obtain a dispersion liquid in which the powder was dispersed. The particle size distribution of the obtained dispersion liquid was measured using a laser diffraction scattering particle size distribution measuring device (MASTERSIZER 2000 manufactured by Malvern Panalytical Ltd.) to obtain a volume-based cumulative particle size distribution curve.

In the obtained cumulative particle size distribution curve, the volume particle size at the time of 50% accumulation is defined as $D_{50}$, which is the 50% cumulative volume particle size of the lithium metal composite oxide powder. Furthermore, in the obtained cumulative particle size distribution curve, the volume particle size at the time of 10% accumulation is defined as $D_{10}$, which is the 10% cumulative volume particle size of the lithium metal composite oxide powder. Furthermore, in the obtained cumulative particle size distribution curve, the volume particle size at the time of 90% accumulation is defined as $D_{90}$, which is the 90% cumulative volume particle size of the lithium metal composite oxide powder.

<Moisture content>

The moisture content of the lithium metal composite oxide powder was measured from 1 g of the lithium metal composite oxide powder to be measured using a coulometric method Karl Fischer moisture meter (831 Coulometer manufactured by Metrohm AG).

<(1) Measurement of mole ratio between element concentrations of Li and element M from particle surface to particle center>

The lithium metal composite oxide powder to be measured was sliced using a focused ion beam device (FIB, JIB-4501 manufactured by JEOL Ltd.), a particle cross section was TEM-observed with an analysis electron microscope (ARM200F manufactured by JEOL Ltd.), an EELS line analysis was carried out from the particle surface to the particle center using an EELS detector (Quantum ER manufactured by Gatan, Inc.), the element concentrations of Li, the element M, and O were calculated from the obtained EELS spectra of Li, the element M, and O, and the mole ratio (Li/element M) between the element concentrations of Li and the element M was obtained.

<(2) Measurement of mole ratio between element concentrations of O and element M from particle surface to particle center>

The element concentrations of O and the element M were calculated from the EELS spectra of O and the element M obtained in the measurement of the (2), and the mole ratio (O/element M) between the element concentrations of O and the element M was obtained.

<(3) Measurement of mole ratio between element concentrations of element M and O inside particle>

The lithium metal composite oxide powder to be measured was sliced using a focused ion beam device (FIB, JIB-4501 manufactured by JEOL Ltd.), a particle cross section was observed with an analysis electron microscope (ARM200F manufactured by JEOL Ltd.), point analysis was carried out using an EDX detector (JED-2300T manufactured by JEOL Ltd.) in a region of D/2 or more and 3D/2 or less from the particle surface to the particle center where D indicates the particle radius, and the mole ratio (element M/O) between the element concentrations of the element M and O was measured.

<Measurement of $R_{Li/m}$ and $R_{O/M}$>

Regarding $R_{Li/M}$, for the element concentrations from the particle surface to the particle center obtained in the measurements of the (1) and (2), the amount of change per nanometer was calculated every measurement point, and the largest value of the amounts of change in the range where the mole ratio (Li/element M) between the element concentrations of Li and the element M continuously increased was defined as the maximum concentration gradient $R_{Li/M}$. In addition, regarding $R_{O/M}$, for the element concentrations from the particle surface to the particle center of the lithium metal composite oxide powder, the amount of change per nanometer was calculated every measurement point, and the largest value of the amounts of change in the range where the mole ratio (O/element M) between the element concentrations of O and the element M continuously increased was defined as the maximum concentration gradient $R_{O/M}$.

<Production of positive electrode for lithium secondary battery>

A paste-form positive electrode mixture was prepared by adding the lithium metal composite oxide powder obtained by the production method described below, a conductive material (acetylene black), and a binder (PVdF) to achieve a composition of the lithium metal composite oxide powder:conductive material:binder = 92:5:3 (mass ratio) and carrying out kneading thereon. During the preparation of the positive electrode mixture, N-methyl-2-pyrrolidone was used as an organic solvent.

The obtained positive electrode mixture was applied to a 40 $\mu$m-thick Al foil, which was to serve as a current collector, and dried in a vacuum at 150°C for eight hours, thereby obtaining a positive electrode for a lithium secondary battery. The electrode area of the positive electrode for a lithium secondary battery was set to 1.65 cm$^2$.

<Production of lithium secondary battery (coin-type half cell)>

The following operation was carried out in a glove box under an argon atmosphere.

The positive electrode for a lithium secondary battery produced in the section <Production of positive electrode for lithium secondary battery> was placed on the lower lid of a part for a coin-type battery R2032 (manufactured by Hohsen Corp.) with the aluminum foil surface facing downward, and a separator (polyethylene porous film) was placed on the positive electrode. An electrolytic solution (300 $\mu$l) was poured thereinto. As the electrolytic solution, an electrolytic solution prepared by dissolving LiPF$_6$ in a liquid mixture of ethylene carbonate, dimethyl carbonate, and ethyl methyl carbonate in a volume ratio of 30:35:35 to achieve 1.0 mol/l was used.

Next, lithium metal was used as a negative electrode, the negative electrode was placed on the upper side of the separator, and the upper lid was placed through a gasket and caulked using a caulking machine, thereby producing a lithium secondary battery (coin-type half cell R2032. Hereinafter, referred to as "half cell" in some cases.).

• Charge and discharge test

After initial charging and discharging using the half cell produced by the above-described method, a discharge rate test was carried out, and the discharge rate characteristics were evaluated.

As the initial charging and discharging, constant-current constant-voltage charging and constant-current-discharging were carried out at a testing temperature of 25°C at a current of 0.2 CA for both the charging and the discharging.

• Discharge rate test

Testing temperature: 25°C
Maximum charging voltage: 4.3 V, charging current: 1 CA, constant-current constant-voltage charging
Minimum discharging voltage: 2.5 V, discharging current: 0.2 CA or 10 CA, constant-current-discharging

A 10 CA/0.2 CA discharge capacity rate was obtained using the discharge capacity at the time of constant-current-discharging the lithium secondary battery at 0.2 CA and the discharge capacity at the time of constant-current-discharging the lithium secondary battery at 10 CA from the following formula and used as an index for the discharge rate characteristics. As the 10 CA/0.2 CA discharge capacity rate becomes higher, the discharge rate characteristics become higher, and the lithium secondary battery exhibits a higher output.

·· 10 CA/0.2 CA discharge capacity rate
10 CA/0.2 CA discharge capacity rate (%)
= discharge capacity at 10 CA/discharge capacity at 0.2 CA x 100

<<Example 1>>

• Production of lithium metal composite oxide powder 1

After water was poured into a reaction vessel equipped with a stirrer and an overflow pipe, an aqueous solution of sodium hydroxide was added thereto, and the liquid temperature was held at 60°C.

A nickel sulfate aqueous solution, a cobalt sulfate aqueous solution, a manganese sulfate aqueous solution, and a solution of zirconium sulfate were mixed such that the atom ratio of nickel atoms, cobalt atoms, manganese atoms, and zirconium atoms became 0.60:0.20:0.195:0.005, thereby preparing a mixed raw material liquid.

Next, the raw material mixture solution and an ammonium sulfate aqueous solution, as a complexing agent, were continuously added into the reaction vessel under stirring, and nitrogen gas was continuously aerated into the reaction vessel. A sodium hydroxide aqueous solution was timely added dropwise such that the pH of the solution in the reaction vessel reached 11.7. In addition, the volume flow rate of the alkaline solution was set to be slower than the volume flow rate of the mixed raw material liquid using a 20 mass% sodium hydroxide aqueous solution. Nickel cobalt manganese zirconium composite hydroxide particles were obtained by the above-described operation, washed, then, dehydrated with a centrifuge, washed, dehydrated, isolated, and dried at 105°C, thereby obtaining a nickel cobalt manganese zirconium composite hydroxide 1.

The nickel cobalt manganese zirconium composite hydroxide 1 and a lithium hydroxide powder were weighed and mixed such that the mole ratio of Li/(Ni + Co + Mn + Zr) reached 1.07, then, sintered at 650°C for five hours in an oxygen atmosphere, crushed, and then sintered at 970°C for five hours in an oxygen atmosphere, thereby obtaining a raw material compound 1.

Next, the raw material compound 1 and boric acid were weighed and mixed such that the mole ratio of B/(Ni + Co + Mn + Zr) reached 0.005 and then thermally treated at 400°C for five hours in an oxygen atmosphere with a relative humidity of 10% or less, thereby obtaining a lithium metal composite oxide powder 1.

The chemical composition of the lithium metal composite oxide powder 1, the composition ratio of the lithium metal composite oxide powder 1 from the particle surface to the particle inside, the mole ratio between the element concentrations of the element M and O inside the particle of the lithium metal composite oxide powder 1, and the results of the BET specific surface area, the average primary particle diameter, $(D_{90} - D_{10}) / D_{50}$, the value obtained by dividing the moisture content by the BET specific surface area, the values of $R_{Li/m}$ and $R_{O/M}$, and the 10 CA/0.2 CA discharge capacity rate are shown in Table 1 and Table 2.

<<Example 2>>

• Production of lithium metal composite oxide powder 2

After water was poured into a reaction vessel equipped with a stirrer and an overflow pipe, an aqueous solution of sodium hydroxide was added thereto, and the liquid temperature was held at 60°C.

A nickel sulfate aqueous solution, a cobalt sulfate aqueous solution, and a manganese sulfate aqueous solution, and a solution of zirconium sulfate were mixed such that the atom ratio of nickel atoms, cobalt atoms, manganese atoms, and zirconium atoms became 0.55:0.21:0.235:0.005, thereby preparing a mixed raw material liquid.

Next, the raw material mixture solution and an ammonium sulfate aqueous solution, as a complexing agent, were continuously added into the reaction vessel under stirring, and nitrogen gas was continuously aerated into the reaction vessel. A sodium hydroxide aqueous solution was timely added dropwise such that the pH of the solution in the reaction vessel reached 11.4. In addition, the volume flow rate of the alkaline solution was set to be slower than the volume flow rate of the mixed raw material liquid using a 20 mass% sodium hydroxide aqueous solution. Nickel cobalt manganese zirconium composite hydroxide particles were obtained, washed, then, dehydrated with a centrifuge, washed, dehydrated, isolated, and dried at 105°C, thereby obtaining a nickel cobalt manganese zirconium composite hydroxide 2.

The nickel cobalt manganese zirconium composite hydroxide 2, a lithium hydroxide powder, and a potassium sulfate powder were weighed and mixed such that the mole ratio of Li/(Ni + Co + Mn + Zr) reached 1.07, then, sintered at 650°C for five hours in an oxygen atmosphere, crushed, and then sintered at 970°C for five hours in an oxygen atmosphere, thereby obtaining a raw material compound 2.

Next, the raw material compound 2 and boric acid were weighed and mixed such that the mole ratio of B/(Ni + Co + Mn + Zr) reached 0.005 and then thermally treated at 400°C for five hours in an oxygen atmosphere with a relative humidity of 10% or less, thereby obtaining a lithium metal composite oxide powder 2.

The chemical composition of the lithium metal composite oxide powder 2, the composition ratio of the lithium metal composite oxide powder 2 from the particle surface to the particle inside, the mole ratio between the element concentrations of the element M and O inside the particle of the lithium metal composite oxide powder 2, and the results of the BET specific surface area, the average primary particle diameter, $(D_{90} - D_{10}) / D_{50}$, the value obtained by dividing the moisture content by the BET specific surface area, the values of $R_{Li/M}$ and $R_{O/M}$, and the 10 CA/0.2 CA discharge capacity rate are shown in Table 1 and Table 2.

<<Example 3>>

• Production of lithium metal composite oxide powder 3

After water was poured into a reaction vessel equipped with a stirrer and an overflow pipe, an aqueous solution of sodium hydroxide was added thereto, and the liquid temperature was held at 40°C.

A nickel sulfate aqueous solution, a cobalt sulfate aqueous solution, and a manganese sulfate aqueous solution were mixed together such that the atom ratio of nickel atoms, cobalt atoms, and manganese atoms became 0.80:0.15:0.05, thereby preparing a mixed raw material liquid.

Next, the raw material mixture solution and an ammonium sulfate aqueous solution, as a complexing agent, were continuously added into the reaction vessel under stirring, and nitrogen gas was continuously aerated into the reaction vessel. A sodium hydroxide aqueous solution was timely added dropwise such that the pH of the solution in the reaction vessel reached 12.0. In addition, the volume flow rate of the alkaline solution was set to be slower than the volume flow rate of the mixed raw material liquid using a 20 mass% sodium hydroxide aqueous solution. Nickel cobalt manganese composite hydroxide particles were obtained, washed, then, dehydrated with a centrifuge, washed, dehydrated, isolated, and dried at 105°C, thereby obtaining a nickel cobalt manganese composite hydroxide 3.

The nickel cobalt manganese composite hydroxide 3 and a lithium hydroxide powder were weighed and mixed such that the mole ratio of Li/(Ni + Co + Mn) reached 1.02, and then sintered at 820°C for eight hours in an oxygen atmosphere, thereby obtaining a lithium metal composite oxide powder. A slurry produced by mixing the above-described powder and pure water such that the ratio (weight ratio) of the powder weight to the total amount reached 0.5 was stirred for 20 minutes, then, dehydrated, isolated, and dried in an atmosphere with a relative humidity of 30°C or lower at 105°C, thereby obtaining a raw material compound 3.

Next, the raw material compound 3 and boric acid were weighed and mixed such that the mole ratio of B/(Ni + Co + Mn) reached 0.004 and then thermally treated at 300°C for five hours in an oxygen atmosphere with a relative humidity of 10% or less, thereby obtaining a lithium metal composite oxide powder 3.

The chemical composition of the lithium metal composite oxide powder 3, the composition ratio of the lithium metal composite oxide powder 3 from the particle surface to the particle inside, the mole ratio between the element concentrations of the element M and O inside the particle of the lithium metal composite oxide powder 3, and the results of the BET specific surface area, the average primary particle diameter, $(D_{90} - D_{10}) / D_{50}$, the value obtained by dividing the moisture content by the BET specific surface area, the values of $R_{Li/m}$ and $R_{O/M}$, and the 10 CA/0.2 CA discharge capacity rate are shown in Table 1 and Table 2.

<<Comparative Example 1>>

• Production of lithium metal composite oxide powder 4

The nickel cobalt manganese zirconium composite hydroxide 1 and a lithium hydroxide powder were weighed and mixed such that the mole ratio of Li/(Ni + Co + Mn + Zr) reached 1.05 and then sintered at 970°C in an oxygen atmosphere for eight hours, thereby obtaining a raw material compound 4.

Next, the raw material compound 4 and boric acid were weighed and mixed such that the mole ratio of B/(Ni + Co + Mn + Zr) reached 0.005 and then thermally treated at 700°C for five hours in an oxygen atmosphere with a relative humidity of 10% or less, thereby obtaining a lithium metal composite oxide powder 4.

The chemical composition of the lithium metal composite oxide powder 4, the composition ratio of the lithium metal composite oxide powder 4 from the particle surface to the particle inside, the mole ratio between the element concentrations of the element M and O inside the particle of the lithium metal composite oxide powder 4, and the results of the BET specific surface area, the average primary particle diameter, $(D_{90} - D_{10}) / D_{50}$, the value obtained by dividing the moisture content by the BET specific surface area, the values of $R_{Li/M}$ and $R_{O/M}$, and the 10 CA/0.2 CA discharge capacity rate are shown in Table 1 and Table 2.

<<Comparative Example 2>>

• Production of lithium metal composite oxide powder 5

After water was poured into a reaction vessel equipped with a stirrer and an overflow pipe, an aqueous solution of sodium hydroxide was added thereto, and the liquid temperature was held at 60°C.

A nickel sulfate aqueous solution, a cobalt sulfate aqueous solution, and a manganese sulfate aqueous solution, and a solution of zirconium sulfate were mixed such that the atom ratio of nickel atoms, cobalt atoms, manganese atoms, and zirconium atoms became 0.55:0.21:0.235:0.005, thereby preparing a mixed raw material liquid.

Next, the raw material mixture solution and an ammonium sulfate aqueous solution, as a complexing agent, were continuously added into the reaction vessel under stirring, and nitrogen gas was continuously aerated into the reaction vessel. A sodium hydroxide aqueous solution was timely added dropwise such that the pH of the solution in the reaction vessel reached 11.4. In addition, the volume flow rate of the alkaline solution was set to be faster than the volume flow rate of the mixed raw material liquid using a 5 mass% sodium hydroxide aqueous solution. Nickel cobalt manganese zirconium composite hydroxide particles were obtained, washed, then, dehydrated with a centrifuge, washed, dehydrated, isolated, and dried at 105°C, thereby obtaining a nickel cobalt manganese zirconium composite hydroxide 5.

The nickel cobalt manganese zirconium composite hydroxide 5 and a lithium hydroxide powder were weighed and mixed such that the mole ratio of Li/(Ni + Co + Mn + Zr) reached 1.20 and then sintered at 940°C in an oxygen atmosphere for eight hours, thereby obtaining a lithium metal composite oxide powder. A slurry produced by mixing the above-described powder and pure water such that the ratio of the powder weight to the total amount reached 0.3 was stirred for 20 minutes, then, dehydrated, isolated, and dried in the atmosphere with a relative humidity adjusted to 30°C or lower at 105°C, thereby obtaining a raw material compound 5.

Next, the raw material compound 5 and boric acid were weighed and mixed such that the mole ratio of B/(Ni + Co + Mn) reached 0.004 and then thermally treated at 200°C for five hours in an oxygen atmosphere with a relative humidity of 10% or less, thereby obtaining a lithium metal composite oxide powder 5.

The chemical composition of the lithium metal composite oxide powder 5, the composition ratio of the lithium metal composite oxide powder 5 from the particle surface to the particle inside, the mole ratio between the element concentrations of the element M and O inside the particle of the lithium metal composite oxide powder 5, and the results of the BET specific surface area, the average primary particle diameter, $(D_{90} - D_{10}) / D_{50}$, the value obtained by dividing the moisture content by the BET specific surface area, the values of $R_{Li/m}$ and $R_{O/M}$, and the 10 CA/0.2 CA discharge capacity rate are shown in Table 1 and Table 2.

<<Comparative Example 3>>

• Production of lithium metal composite oxide powder 6

The nickel cobalt manganese composite hydroxide 3 and a lithium hydroxide powder were weighed and mixed such that the mole ratio of Li/(Ni + Co + Mn) reached 1.02, and then sintered at 840°C for eight hours in an oxygen atmosphere, thereby obtaining a lithium metal composite oxide powder 6.

The chemical composition of the lithium metal composite oxide powder 6, the composition ratio of the lithium metal composite oxide powder 6 from the particle surface to the particle inside, the mole ratio between the element concentrations of the element M and O inside the particle of the lithium metal composite oxide powder 6, and the results of the BET specific surface area, the average primary particle diameter, $(D_{90} - D_{10}) / D_{50}$, the value obtained by dividing the moisture content by the BET specific surface area, the values of $R_{Li/M}$ and $R_{O/M}$, and the 10 CA/0.2 CA discharge capacity rate are shown in Table 1 and Table 2.

The composition of the lithium metal composite oxide powder of each of Examples 1 to 3 and Comparative Examples 1 to 3, the mole ratio (Li/element M) between the element concentrations of Li and the element M from the particle surface to the particle center, the mole ratio (O/element M) between the element concentrations of O and the element M from the particle surface to the particle center, the mole ratio (element M/O) between the element concentrations of the element M and O inside the particle, and the results of the BET specific surface area, the average primary particle diameter, $(D_{90} - D_{10}) / D_{50}$, the value (moisture amount/BET specific surface area in the tables) obtained by dividing the moisture content by the BET specific surface area, the values of $R_{Li/M}$ and $R_{O/M}$, and the 10 CA/0.2 CA discharge capacity rate are summarized in Table 1, Table 2, and Table 3. It should be noted that "M/(Ni + X)" in Table 1 indicates the ratio of the content of the element M to the total amount of Ni and the element X.

[Table 1]

| | Ni/(Ni + X) | M/(Ni + X) | Behavior from particle surface to particle center | | Inside particle | Composition formula | | | | | |
|---|---|---|---|---|---|---|---|---|---|---|---|
| | | mol% | Li/element M | O/element M | Element M/O | n1 | z | w | X | M |
| Example 1 | 0.60 | 0.5 | Continuous increases | Continuous increases | 0.003 | 0.02 | 0.40 | 0.005 | Co, Mn, Zr | B |
| Example 2 | 0.55 | 0.4 | Continuous increases | Continuous increases | 0.002 | 0.02 | 0.45 | 0.004 | Co, Mn, Zr | B |
| Example 3 | 0.85 | 0.3 | Continuous increases | Continuous increases | 0.002 | 0.01 | 0.15 | 0.003 | Co, Mn | B |
| Comparative Example 1 | 0.60 | 0.3 | No peak | No peak | 0.0004 | 0.02 | 0.40 | 0.003 | Co, Mn, Zr | B |
| Comparative Example 2 | 0.55 | 0.5 | Discontinuous | Discontinuous | 0.001 | 0.02 | 0.45 | 0.005 | Co, Mn, Zr | B |
| Comparative Example 3 | 0.85 | 0 | No peak | No peak | 0 | 0.00 | 0.15 | 0 | Co, Mn | None |

[Table 2]

|  | Composition (analysis values) | | | | |
|---|---|---|---|---|---|
|  | Ni | Co | Mn | Zr | B |
| Example 1 | 0.60 | 0.20 | 0.24 | 0.005 | 0.005 |
| Example 2 | 0.55 | 0.21 | 0.23 | 0.005 | 0.004 |
| Example 3 | 0.85 | 0.10 | 0.05 | 0 | 0.003 |
| Comparative Example 1 | 0.60 | 0.20 | 0.19 | 0.005 | 0.003 |
| Comparative Example 2 | 0.55 | 0.21 | 0.23 | 0.005 | 0.005 |
| Comparative Example 3 | 0.85 | 0.10 | 0.05 | 0 | 0 |

[Table 3]

|  | BET specific surface area | Average primary particle diameter | $D_{90} - D_{10}/D_{50}$ | Moisture amount/BET specific surface area | $R_{Li/M} > R_{O/M}$ | $R_{Li/M}$ | $R_{O/M}$ | 10C/0.2C |
|---|---|---|---|---|---|---|---|---|
|  | $m^2/g$ | $\mu m$ |  |  |  |  |  | Retention rate |
| Example 1 | 0.50 | 2.1 | 1.1 | 0.06 | O | 1.07 | 2.72 | 62 |
| Example 2 | 0.60 | 1.7 | 1.3 | 0.07 | O | 0.55 | 1.02 | 66 |
| Example 3 | 0.20 | 1.1 | 0.7 | 0.35 | O | 0.39 | 0.52 | 61 |
| Comparative Example 1 | 0.53 | 2.1 | 1.0 | 0.09 | X | - | - | 46 |
| Comparative Example 2 | 0.78 | 2.0 | 0.9 | 0.06 | X | - | - | 52 |
| Comparative Example 3 | 0.31 | 0.4 | 0.8 | 0.97 | X | - | - | 55 |

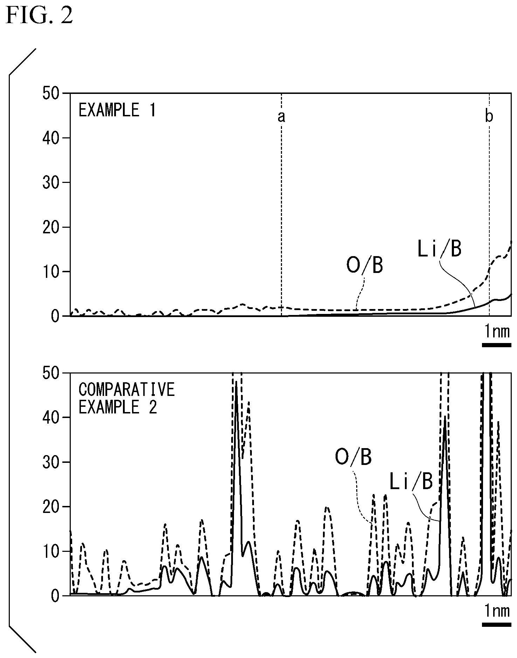

Fig. 2 shows the results of the element mapping of the lithium metal composite oxide powders of Example 1 and Comparative Example 2 by electron energy-loss spectroscopy (EELS). The horizontal axis of the graph shown in Fig. 2 means the depth (unit: nm) from the particle surface of the lithium metal composite oxide powder in a direction toward the particle center, and the vertical axis means the mole ratio between the element concentrations of Li or O and the element M. In Fig. 2, "a" means the outermost surface of the lithium metal composite oxide powder particle. "b" means a 7 nm region from the outermost surface of the lithium metal composite oxide powder particle toward the particle center.

As shown in Fig. 2, in the lithium metal composite oxide powder of Example 1, the boron concentration continuously increased in the 7 nm region from the particle surface toward the particle center. On the other hand, in the lithium metal composite oxide powder of Comparative Example 2, a continuous increase in boron as in Example 1 was not observed.

[Industrial Applicability]

According to the present invention, it is possible to provide a lithium metal composite oxide powder capable of improving the discharge capacity retention rate at a high current rate of a lithium secondary battery in the case of being used as a positive electrode active material for the lithium secondary battery and a positive electrode active material for a lithium secondary battery in which the same is used.

[Reference Signs List]

1: Separator
2: Positive electrode
3: Negative electrode
4: Electrode group
5: Battery can
6: Electrolytic solution
7: Top insulator
8: Sealing body
10: Lithium secondary battery
21: Positive electrode lead
31: Negative electrode lead

**Claims**

1. A lithium metal composite oxide powder having a layered crystal structure, the powder comprising:

at least Li, Ni, an element X, and an element M,
wherein the element X is one or more elements selected from the group consisting of Co, Mn, Fe, Cu, Ti, Mg, Al, W, Mo, Nb, Zn, Sn, Zr, Ga, and V,
the element M is one or more elements selected from the group consisting of B, Si, S, and P,
a ratio of a content of the element M to a total amount of Ni and the element X in the lithium metal composite oxide powder is 0.01 mol% or more and 5 mol% or less,
a ratio of a content of Ni to the total amount of Ni and the element X, which is indicated by Ni/(Ni + X), in the lithium metal composite oxide powder is 0.4 or more in terms of a mole ratio, and
the following (1), (2), and (3) are satisfied,
(1) a mole ratio between element concentrations of Li and the element M that is indicated by Li/element M continuously increases from a particle surface to a particle center of the lithium metal composite oxide powder,
(2) a mole ratio between element concentrations of O and the element M that is indicated by O/element M continuously increases from the particle surface to the particle center of the lithium metal composite oxide powder, and
(3) a mole ratio between the element concentrations of the element M and O that is indicated by element M/O inside the particle of the lithium metal composite oxide powder is 0.05 or less.

2. The lithium metal composite oxide powder according to Claim 1 that is represented by the following composition formula (A),

$$Li[Li_{n1}(Ni_{(1-z-w)}X_zM_w)_{1-n1}]O_2 \ (A)$$

(here, X is one or more elements selected from the group consisting of Co, Mn, Fe, Cu, Ti, Mg, Al, W, Mo, Nb, Zn, Sn, Zr, Ga, and V, M is one or more elements selected from the group consisting of B, Si, S, and P, and $0 \leq n1 \leq 0.2$, $0 < z \leq 0.6$, and $0 < w \leq 0.1$ are satisfied).

3. The lithium metal composite oxide powder according to Claim 1 or 2,
wherein a BET specific surface area is 2 $m^2$/g or less.

4. The lithium metal composite oxide powder according to any one of Claims 1 to 3,
wherein an average primary particle diameter is 0.3 $\mu$m or more and 8 $\mu$m or less.

5. The lithium metal composite oxide powder according to any one of Claims 1 to 4,
wherein, in a 10% cumulative diameter ($D_{10}$), a 50% cumulative diameter ($D_{50}$), and a 90% cumulative diameter ($D_{90}$), all of which are obtained from particle size distribution measurement values, the 50% cumulative diameter ($D_{50}$) is 2 $\mu$m or more and 10 $\mu$m or less, and furthermore, a relationship of the following formula (B) is satisfied,

$$0.3 \leq (D_{90} - D_{10}) / D_{50} \leq 3 \ ... \ (B).$$

6.  The lithium metal composite oxide powder according to any one of Claims 1 to 5,
    wherein a value obtained by dividing a moisture content (mass%) by a BET specific surface area ($m^2/g$) that is
    indicated by moisture content (mass%)/BET specific surface area ($m^2/g$) is 0.005 or more and 0.7 or less.

7.  The lithium metal composite oxide powder according to any one of Claims 1 to 6,
    wherein a maximum concentration gradient $R_{Li/m}$ in a range where the mole ratio between the element concentrations
    of Li and the element M that is indicated by Li/element M continuously increases from the particle surface to the
    particle center of the lithium metal composite oxide powder is small compared with a maximum concentration gradient
    $R_{O/M}$ in a range where the mole ratio between the element concentrations of O and the element M that is indicated
    by O/element M continuously increases from the particle surface to the particle center of the lithium metal composite
    oxide powder ($R_{O/M} > R_{Li/M}$).

8.  A positive electrode active material for a lithium secondary battery, comprising:
    the lithium metal composite oxide powder according to any one of Claims 1 to 7.

FIG. 1A

FIG. 1B

FIG. 2

FIG. 3

FIG. 4

<div style="text-align:center">

**INTERNATIONAL SEARCH REPORT**

</div>

| International application No. |
|---|
| PCT/JP2019/049989 |

| A. CLASSIFICATION OF SUBJECT MATTER |
|---|
| Int. Cl. C01G53/00(2006.01)i, H01M4/36(2006.01)i, H01M4/505(2010.01)i, H01M4/525(2010.01)i<br>FI: C01G53/00 A, H01M4/525, H01M4/505, H01M4/36 C<br>According to International Patent Classification (IPC) or to both national classification and IPC |

| B. FIELDS SEARCHED |
|---|
| Minimum documentation searched (classification system followed by classification symbols)<br>Int. Cl. C01G53/00, H01M4/36, H01M4/505, H01M4/525 |
| Documentation searched other than minimum documentation to the extent that such documents are included in the fields searched<br>Published examined utility model applications of Japan    1922-1996<br>Published unexamined utility model applications of Japan   1971-2020<br>Registered utility model specifications of Japan      1996-2020<br>Published registered utility model applications of Japan   1994-2020 |
| Electronic data base consulted during the international search (name of data base and, where practicable, search terms used) |

| C. DOCUMENTS CONSIDERED TO BE RELEVANT | | |
|---|---|---|
| Category* | Citation of document, with indication, where appropriate, of the relevant passages | Relevant to claim No. |
| A | WO 2017/150506 A1 (MITSUI MINING & SMELTING CO., LTD.) 08 September 2017, claims 1-4, paragraphs [0021], [0043]-[0047] | 1-8 |
| A | JP 2018-172257 A (SUMITOMO CHEMICAL CO., LTD.) 08 November 2018, claims 1-7, paragraphs [0010], [0032]-[0049] | 1-8 |
| A | JP 2016-033854 A (NICHIA CHEMICAL INDUSTRIES, LTD.) 10 March 2016, claims 1-10, paragraphs [0020]-[0038] | 1-8 |
| A | JP 2010-086922 A (TODA KOGYO CORP.) 15 April 2010, claims 1-11, paragraphs [0021]-[0071] | 1-8 |

| ☐ Further documents are listed in the continuation of Box C. | ☒ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>20.01.2020 | Date of mailing of the international search report<br>04.02.2020 |
|---|---|
| Name and mailing address of the ISA/<br>    Japan Patent Office<br>    3-4-3, Kasumigaseki, Chiyoda-ku,<br>    Tokyo 100-8915, Japan | Authorized officer<br><br><br>Telephone No. |

Form PCT/ISA/210 (second sheet) (January 2015)

**INTERNATIONAL SEARCH REPORT**

Information on patent family members

| | International application No. |
|---|---|
| | PCT/JP2019/049989 |

| Patent Documents referred to in the Report | Publication Date | Patent Family | Publication Date |
|---|---|---|---|
| WO 2017/150506 A1 | 08.09.2017 | JP 6516919 B2 | |
| JP 2018-172257 A | 08.11.2018 | WO 2018/181530 A1 | |
| JP 2016-033854 A | 10.03.2016 | (Family: none) | |
| JP 2010-086922 A | 15.04.2010 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019076522 A
- JP 2014038828 A

- JP 2002201028 A